# EUROPEAN PATENT APPLICATION

(11) **EP 4 503 658 A1**
(43) Date of publication of application: **05.02.2025**
(21) Application number: 23778069.7
(22) Date of filing: 27.03.2023
(51) Int. Cl.: H04W 4/024

(54) **APPARATUS AND METHOD FOR ASSISTING VEHICLE FERRY, MEDIUM AND COMPUTER PROGRAM PRODUCT**

(30) Priority: 30.03.2022 CN 202210327097
(71) Applicant: Sony Group Corporation, Tokyo 108-0075 (JP)
(72) Inventor: CUI, Tao, Beijing 100027 (CN); YU, Chunbo, Shanghai 200050 (CN)
(74) Representative: D Young & Co LLP
(86) International application number: PCT/CN2023/083955
(87) International publication number: WO 2023/185702

(57) **Abstract**

The present disclosure relates to an apparatus and method for assisting vehicle ferry, a medium, and a computer program product. An electronic device for a server device side comprises a processing circuit configured to obtain vehicle information of a first vehicle for ferry, obtain ferry-related information from a ferry-related device; generate vehicle ferry assistance information according to the vehicle information of the first vehicle and the ferry-related information, and provide the vehicle ferry assistance information to at least one of the first vehicle or the ferry-related device.

## Description

### CROSS-REFERENCE TO RELATED APPLICATIONS

The present application claims the priority to the Chinese patent application No. 202210327097.1 filed on March 30, 2022, the disclosure of which is incorporated by reference herein in its entirety.

### TECHNICAL FIELD

The present disclosure relates to the field of vehicle ferry, and more particularly, to an apparatus and method for assisting vehicle ferry.

### BACKGROUND

Vehicle ferry includes inland river vehicle ferry and sea-crossing vehicle ferry, and ferry type includes small ferry with a single-layer parking deck and large ro-ro passenger ship with multiple layers of decks. Compared with bridge and tunnel, the small ferry has a short construction period and low construction cost, and can quickly form transport capacity, so that it is an important mode of river-crossing transport. The large ro-ro passenger ship is a dual-purpose transport ship for both people and vehicles, which connects an island with a mainland, and is mainly used for shipping trucks, small cars, container trailers and tourists and providing accommodation and entertainment services for the tourists aboard.

Vehicle ferry terminal includes a small terminal and a large ro-ro passenger-cargo terminal. The ro-ro passenger-cargo terminal is a large terminal, whose functional areas include a water area such as a course and a turning basin, and a land area such as a security check hall, parking lots before and after check, a vehicle waiting area, a passenger embarking and disembarking area at a front edge of the terminal, as well as a port gate and a passenger station, and whose service objects include inbound and outbound vehicles and passengers. The ro-ro passenger-cargo terminal is a complex and dynamic logistics and road traffic system, and is limited by functional area layout, traffic organization and the like, so that there may be issues such as ferry safety, long waiting time, and traffic inefficiency caused by crowd congestion, vehicle congestion, carrying dangerous goods and the like.

### SUMMARY

A brief summary of the present disclosure is presented hereinafter to provide a basic understanding of some aspects of the present disclosure. However, it should be understood that this summary is not an exhaustive overview of the present disclosure. It is not intended to determine key or critical elements of the present disclosure or to limit the scope of the present disclosure . Its purpose is only to present some concepts of the present disclosure in a simplified form as a prelude to the more detailed description to be presented later.

A ferry terminal traffic system known by the inventors of the present application is an internal closed system, cannot be interconnected with ferry vehicles, and thus cannot provide better services such as security check, charging, and parking for such vehicles . In addition, the ferry terminal traffic system cannot obtain vehicle information in time to provide an automated dynamic stowage service for a ferry, as a result, manual stowage causes large workload, inefficiency and long vehicle waiting time, and meanwhile, an optimal utilization ratio of in-cabin parking space cannot be achieved.

In view of one or more of the above issues, the present disclosure provides a mechanism for assisting vehicle ferry, which enables a ferry vehicle to perform message interaction with ferry-related devices such as a shore side device provided on a ferry terminal, and a ferry side device provided on a ferry, thereby improving service efficiency and service quality of the vehicle ferry.

According to an aspect of the present disclosure, there is provided an electronic device for a server device side. The electronic device may comprise a processing circuit, which may be configured to: obtain vehicle information of a first vehicle for ferry; obtain ferry-related information from a ferry-related device; generate vehicle ferry assistance information according to the vehicle information of the first vehicle and the ferry-related information; and provide the vehicle ferry assistance information to at least one of the first vehicle or the ferry-related device.

According to another aspect of the present disclosure, there is provided a shore side device provided on a ferry terminal. The shore side device may comprise a processing circuit, which may be configured to: obtain vehicle information of a vehicle for ferry; obtain shore side information related to the ferry terminal; generate vehicle ferry assistance information according to the vehicle information of the vehicle and the shore side information; and providing the vehicle ferry assistance information to the vehicle.

According to another aspect of the present disclosure, there is provided a ferry side device provided on a ferry. The ferry side device may comprise a processing circuit, which may be configured to: obtain vehicle information of a first vehicle riding the ferry; obtain ferry information related to the ferry; generate vehicle ferry assistance information according to the vehicle information of the first vehicle and the ferry information; and provide the vehicle ferry assistance information to the first vehicle.

According to another aspect of the present disclosure, there is provided an electronic device for a vehicle side. The electronic device may comprise a processing circuit, which may be configured to: in response to control information from a server device or a ferry-related device, provide vehicle information of the vehicle to a server device for generating, by the server device or the ferry-related device, vehicle ferry assistance information; and obtain the vehicle ferry assistance information from the server device or the ferry-related device for assisting the vehicle for ferry.

According to another aspect of the present disclosure, there is provided a communication method for a server device. The method may comprise: obtaining vehicle information of a vehicle for ferry; obtaining ferry-related information from a ferry-related device; generating vehicle ferry assistance information according to the vehicle information of the vehicle and the ferry-related information; and providing the vehicle ferry assistance information to at least one of the vehicle or the ferry-related device.

According to another aspect of the present disclosure, there is provided a communication method for a shore side device provided on a ferry terminal. The method may comprise: obtaining vehicle information of a vehicle for ferry; obtaining shore side information related to the ferry terminal; generating vehicle ferry assistance information according to the vehicle information of the vehicle and the shore side information; and providing the vehicle ferry assistance information to the vehicle.

According to another aspect of the present disclosure, there is provided a communication method for a ferry side device provided on a ferry. The method may comprise: obtaining vehicle information of a vehicle riding the ferry; obtaining ferry information related to the ferry; generating vehicle ferry assistance information according to the vehicle information of the vehicle and the ferry information; and providing the vehicle ferry assistance information to the vehicle.

According to another aspect of the present disclosure, there is provided a communication method for a vehicle. The method may comprise: in response to control information from a server device or a ferry-related device, providing vehicle information of the vehicle to the server device for generating, by the server device or the ferry-related device, vehicle ferry assistance information; and obtaining the vehicle ferry assistance information from the server device or the ferry-related device for assisting the vehicle for ferry.

According to another aspect of the present disclosure, there is provided a computer-readable storage medium, comprising executable instructions which, when executed by an information processing apparatus, cause the information processing apparatus to perform the communication method according to the present disclosure.

According to another aspect of the present disclosure, there is provided a computer program product, comprising a computer program which, when run by a processor, causes the processor to perform the communication method according to the present disclosure.

According to one or more embodiments of the present disclosure, there is provided a mechanism for assisting vehicle ferry, which enables a ferry vehicle to perform message interaction with ferry-related devices such as a shore side device provided on a ferry terminal, and a ferry side device provided on a ferry, thereby improving service efficiency and service quality of the vehicle ferry.

### BRIEF DESCRIPTION OF THE DRAWINGS

The accompanying drawings, which constitute a part of the specification, illustrate embodiments of the present disclosure and together with the description, serve to explain the principles of the present disclosure.

The present disclosure may be more clearly understood according to the following detailed description by referring to the accompanying drawings, in which:
Fig. 1 is a schematic diagram illustrating a vehicle ferry scenario;
Fig. 2 is an exemplary configuration block diagram illustrating an electronic device for a server device side according to an embodiment of the present disclosure;
Fig. 3 is an exemplary flowchart illustrating a communication method for a server device side according to an embodiment of the present disclosure;
Fig. 4 is a schematic diagram illustrating message interaction in a vehicle ferry scenario 1 according to an embodiment of the present disclosure;
Fig. 5 is a schematic diagram illustrating message interaction in a vehicle ferry scenario 2 according to an embodiment of the present disclosure;
Fig. 6 is an exemplary flowchart illustrating vehicle ferry collision warning according to an embodiment of the present disclosure;
Fig. 7 is a schematic diagram illustrating message interaction in a vehicle ferry scenario 3 according to an embodiment of the present disclosure;
Fig. 8 is an exemplary flowchart illustrating ferry vehicle stowage and parking guidance according to an embodiment of the present disclosure;
Fig. 9 is a schematic diagram illustrating safety spacing between ferry parking spaces for different vehicles according to an embodiment of the present disclosure;
Fig. 10 is an example illustrating parking of different types of vehicles based on fixed lanes and fixed parking spaces;
Fig. 11 is a schematic diagram illustrating dynamic planning of parking space distribution according to an embodiment of the present disclosure;
Fig. 12 is a schematic diagram illustrating parking space distribution after dynamic stowage according to an embodiment of the present disclosure;
Fig. 13 is an exemplary configuration block diagram illustrating an electronic device for a shore side device provided on a ferry terminal according to an embodiment of the present disclosure;
Fig. 14 is an exemplary flowchart illustrating a communication method for a shore side device according to an embodiment of the present disclosure;
Fig. 15 is a schematic diagram illustrating message interaction in a vehicle ferry scenario 1 according to an embodiment of the present disclosure;
Fig. 16 is an exemplary configuration block diagram illustrating an electronic device for a ferry side device provided on a ferry according to an embodiment of the present disclosure;
Fig. 17 is an exemplary flowchart illustrating a communication method for a ferry side device according to an embodiment of the present disclosure;
Fig. 18 is a schematic diagram illustrating message interaction in vehicle ferry scenarios 2 and 3 according to an embodiment of the present disclosure;
Fig. 19 is an exemplary configuration block diagram illustrating an electronic device for a vehicle side according to an embodiment of the present disclosure;
Fig. 20 is an exemplary flowchart illustrating a communication method for a vehicle according to an embodiment of the present disclosure; and
Fig. 21 is a block diagram illustrating a first example of a schematic configuration of an RSU according to an embodiment of the present disclosure;
Fig. 22 is a block diagram illustrating a second example of a schematic configuration of an RSU according to an embodiment of the present disclosure;
Fig. 23 is a block diagram illustrating an example of a schematic configuration of a smartphone according to an embodiment of the present disclosure; and
Fig. 24 is a block diagram illustrating an example of a schematic configuration of a car navigation device according to an embodiment of the present disclosure.

### DETAILED DESCRIPTION

Various exemplary embodiments of the present disclosure will now be described in detail with reference to the accompanying drawings. It should be noted that: the relative arrangements, numerical expressions and numerical values of components and steps set forth in these embodiments do not limit the scope of the present disclosure unless otherwise specified.

Meanwhile, it should be understood that the sizes of the portions shown in the drawings are not drawn in an actual scale for the convenience of description.

The following description of at least one exemplary embodiment is merely illustrative in nature and is in no way intended to limit this disclosure and its application or uses.

Techniques, methods, and devices known to one of ordinary skill in the related art may not be discussed in detail but are intended to be part of the specification where appropriate.

In all examples shown and discussed herein, any specific value should be construed as exemplary only and not as a limitation. Thus, other examples of an exemplary embodiment may have different values.

It should be noted that: similar reference numbers and letters refer to similar items in the following figures, and thus, once a certain item is defined in one figure, it need not be discussed further in subsequent figures.

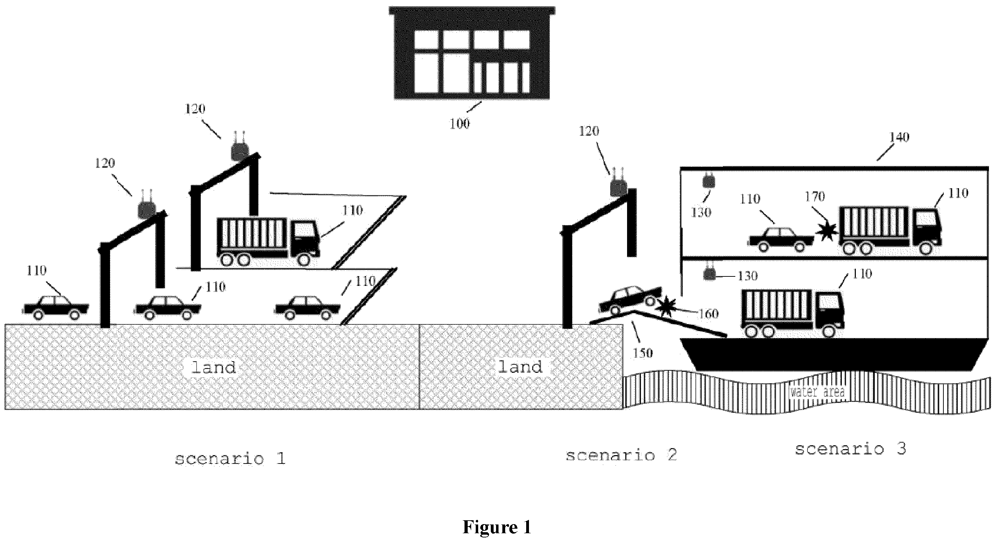

Fig. 1 illustrates three example scenarios for vehicle ferry.

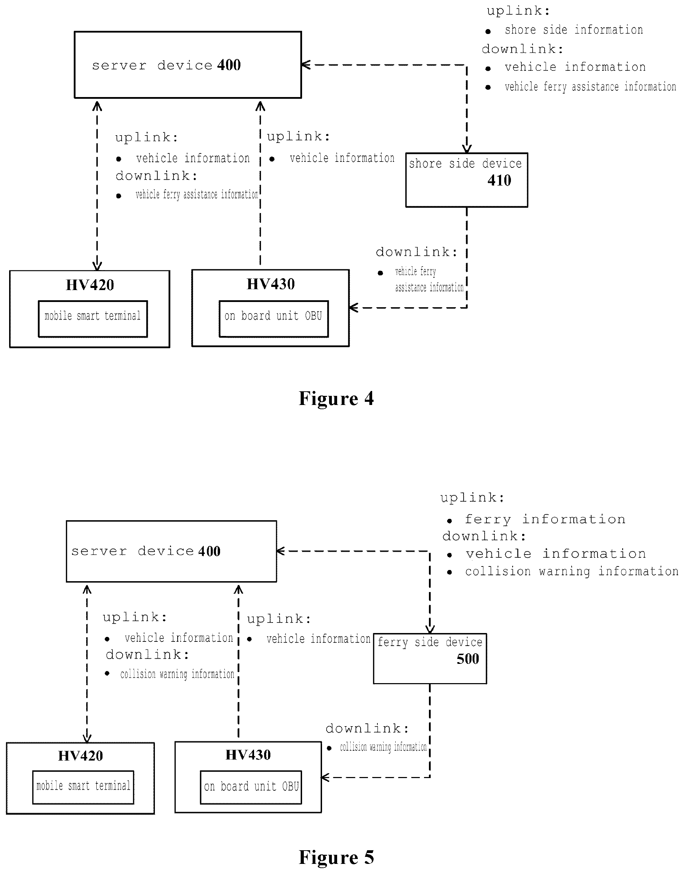

A scenario 1 corresponds to a scenario before a vehicle embarks, including, for example, vehicle ferry reservation, vehicle security check, weighing and charging, parking in a waiting yard and the like. As shown in Fig. 1, a server device 100 may communicate with a vehicle 110 and/or a shore side device 120 provided on a ferry terminal, thereby providing, for the vehicle 110 and/or the shore side device 120, corresponding vehicle ferry assistance information, such as a ferry reservation result, a security check result, weighing and charging information, waiting yard guidance information, and the like of the vehicle 110. The shore side device 120 in the scenario 1 is provided, for example, in land areas such as a security check hall of the ferry terminal, parking lots before and after check, a vehicle waiting area, and an embarking/disembarking area for passengers at a front edge of the terminal. For details of the scenario 1, the detailed description will be made with reference to Fig. 4 described later.

Furthermore, although Fig. 1 depicts that the vehicle is located at the ferry terminal, in some embodiments, the scenario 1 may also occur when the vehicle 110 has not yet reached the ferry terminal. For example, in a scenario of the vehicle making a ferry reservation, the vehicle 110 may, before going to the ferry terminal, communicate with the server device 100 in advance to make the ferry reservation.

A scenario 2 corresponds to a scenario where the vehicle embarks onto or disembarks off the ferry. As shown in Fig. 1, when the vehicle embarks onto a ferry 140, the server device 100 may communicate with the vehicle 110, a shore side device 120 provided on the ferry terminal, and/or a ferry side device 130 provided on the ferry, thereby providing, to the vehicle 110, the shore side device 120, and/or the ferry side device 130, corresponding vehicle ferry assistance information, such as a collision risk of the vehicle 110 with the ferry 140 (e.g., a gangplank of the ferry, a guardrail, a hatch, etc.), and a collision risk of the vehicle 110 with other vehicles. The shore side device 120 in the scenario 2 is provided, for example, at a vehicle embarking gate, a vehicle disembarking gate, and the like. For details of the scenario 2, the detailed description will be made with reference to Fig. 5 described later.

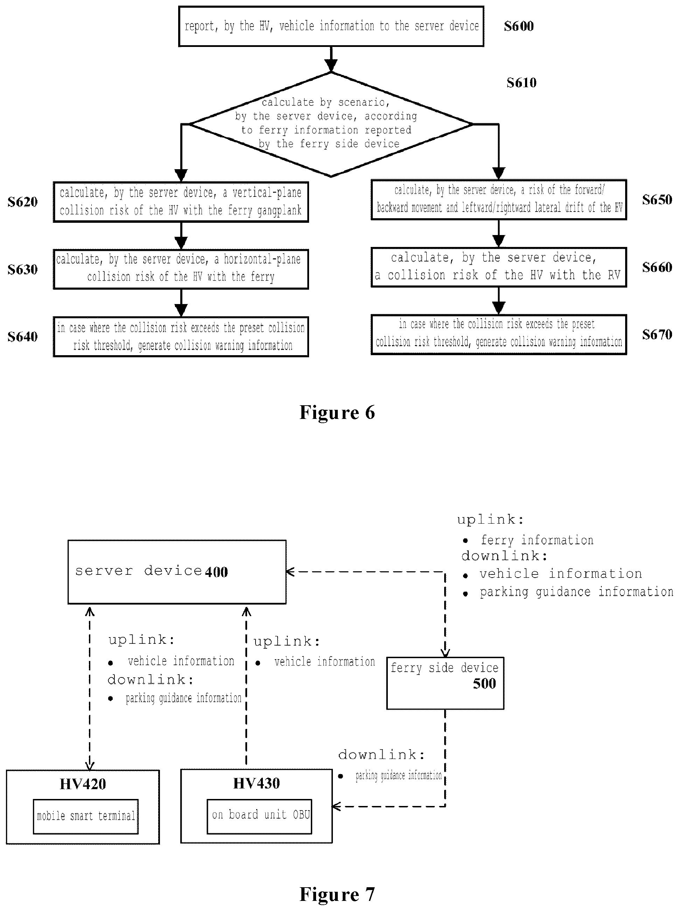

A scenario 3 corresponds to a scenario after the vehicle embarks. As shown in Fig. 1, after the vehicle embarks, the server device 100 may communicate with the vehicle 110 and/or the ferry side device 130 provided on the ferry, thereby providing, to the vehicle 110 and/or the ferry side device 130, corresponding vehicle ferry assistance information, such as parking guidance information for guiding parking of the vehicle 110 in a cabin. Furthermore, although the scenario 3 is a scenario after the vehicle embarks, the server device 100 and the vehicle 110 may also communicate with the shore side device 120 provided on the ferry terminal as needed, to obtain or provide required information. For details of the scenario 3, the detailed description will be made with reference to Fig. 7 described later.

It should be understood that, mounting positions and the number of the shore side device 120 and the ferry side device 130 shown in Fig. 1 are merely examples, and any number of the shore side device 120 and the ferry side device 130 may be provided according to actual needs.

In some embodiments, the server device 100 may be, for example, an Internet-of-Vehicles server device (e.g., an Internet-of-Vehicles center subsystem) that supports an Internet-of-Vehicles protocol. The vehicle 110 may be carried with a communication unit, such as an on board unit (OBU) based on the Internet-of-Vehicles communication protocol and/or a mobile smart terminal bearing the Internet-of-Vehicles communication protocol. In addition, the shore side device 120 and the ferry side device 130 may include a road side unit (RSU) based on the Internet-of-Vehicles protocol. Thus, the server device 100, the vehicle 110, the shore side device 120, and the ferry side device 130 may perform message interaction based on the Internet-of-Vehicles communication protocol (e.g. C-V2X (Cellular-Vehicle to everything)).

It should be understood that the above message interaction based on the Internet-of-Vehicles communication protocol is only one example of the message interaction between the server device 100, the vehicle 110, the shore side device 120, and the ferry side device 130 of the present disclosure, and those skilled in the art may also adopt other communication modes according to actual needs, as long as the message interaction between the above devices can be realized.

In some embodiments, the vehicle 110, the shore side device 120, and the ferry side device 130 may be respectively provided with one or more sensors for sensing vehicle information, shore side information related to the ferry terminal, and ferry information related to the ferry 140. The sensor may include, for example, but is not limited to, radar (e.g., ultrasonic radar, millimeter wave radar, laser radar, etc.), a camera (e.g., a still camera, stereo camera, high-definition camera, etc.), shake sensor, liquid/gas detection sensor, X-ray security check instrument, weighbridge, etc. In addition, those skilled in the art can arrange other types of sensors for sensing required information according to actual needs. In some embodiments, the required vehicle information, shore side information, and ferry information can be obtained by fusion perception of multi-source heterogeneous sensors.

In some embodiments, one or more of the server device 100, the shore side device 120, and the ferry side device 130 may include a computing device, such as a mobile edge computing (MEC) device, to provide computing power.

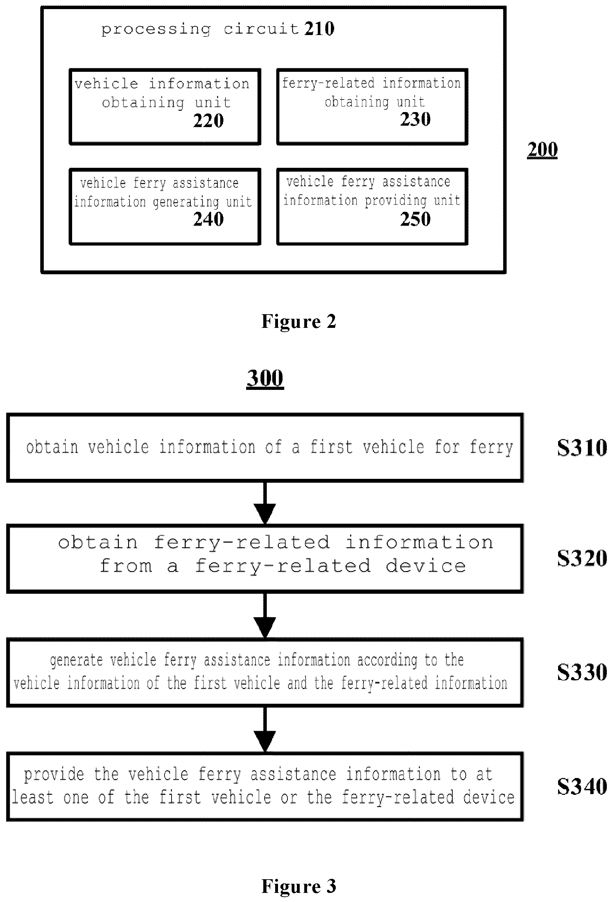

Fig. 2 illustrates an exemplary configuration block diagram of an electronic device 200 for a server device side according to an embodiment of the present disclosure. The server device may correspond to, for example, the server device 100 shown in Fig. 1.

In some embodiments, the electronic device 200 may include a processing circuit 210. The processing circuit 210 of the electronic device 200 provides various functions of the electronic device 200. In some embodiments, the processing circuit 210 of the electronic device 200 may be configured to perform a communication method for the server device.

The processing circuit 210 may refer to various implementations of digital circuitry, analog circuitry, or mixed-signal (a combination of analog and digital signals) circuitry that perform functions in a computing system. The processing circuit may include, for example, a circuit such as an integrated circuit (IC), an application specific integrated circuit (ASIC), circuits of an individual processor core or part thereof, an entire processor core, an individual processor, a programmable hardware device such as a field programmable gate array (FPGA), and/or a system including a plurality of processors.

In some embodiments, the processing circuit 210 may include a vehicle information obtaining unit 220, a ferry-related information obtaining unit 230, vehicle ferry assistance information generating unit 240, and vehicle ferry assistance information providing unit 250, which are respectively configured to perform steps S310 to 340 in a communication method 300 for a server device illustrated in Fig. 3 described later.

In some embodiments, the electronic device 200 may also include a memory (not shown). The memory of the electronic device 200 may store information generated by the processing circuit 210 as well as program and data for operations of the electronic device 210. The memory may be a volatile memory and/or a non-volatile memory. For example, the memory may include, but is not limited to, a random access memory (RAM), dynamic random access memory (DRAM), static random access memory (SRAM), read-only memory (ROM), and flash memory. In addition, the electronic device 200 may be implemented at a chip level, or at a device level by including other external components.

Fig. 3 illustrates an exemplary flowchart of a communication method 300 for a server device according to an embodiment of the present disclosure. The communication method may be used, for example, in the electronic device 200 shown in Fig. 2.

As shown in Fig. 3, in step S310, the vehicle information obtaining unit 220 obtains vehicle information of a first vehicle for ferry. The first vehicle may correspond to, for example, the vehicle 110 in Fig. 1.

The vehicle information may include any vehicle information related to the ferry vehicle (e.g., the vehicle 110). Table 1 below shows an exemplary vehicle information table, including a timestamp, basic vehicle information, vehicle extension information, and other information. The timestamp includes, for example, time information (e.g., current time) . The basic vehicle information may include, for example, vehicle position (e.g., longitude and latitude, altitude), vehicle orientation (e.g., a direction angle of vehicle head), vehicle body size (e.g., length, width, height), vehicle weight, vehicle type, vehicle speed. The vehicle extension information may include, for example, chassis height information (e.g., chassis ground clearance), vehicle center-of-gravity information (e.g., center-of-gravity height, distance of center-of-gravity to vehicle head). The other information may include, for example, vehicle reservation information, vehicle license plate number, and other vehicle-related information. The vehicle information of the first vehicle obtained in the step S310 may include, for example, one or more items in Table 1 below. It should be understood that the above vehicle information is merely an example, and the vehicle information according to the embodiment of the present disclosure may also include other information of the vehicle.

**Table 1: vehicle information table**

| Data classification | Data name |
|---|---|
| timestamp | time |
| basic vehicle information | vehicle position |
| | vehicle orientation |
| | vehicle body size |
| | vehicle weight |
| | vehicle type |
| | vehicle speed |
| vehicle extension information | chassis height information |
| | vehicle center-of-gravity information |
| other information | vehicle reservation information |
| | vehicle license plate number |

In step S320, the ferry-related information obtaining unit 230 obtains ferry-related information from a ferry-related device. The ferry-related device may correspond, for example, to the shore side device 120 and/or the ferry side device 130 in Fig. 1, or to another device related to the ferry of the vehicle 110.

In some embodiments, in case where the ferry-related device includes a shore side device (e.g., the shore side device 120), the ferry-related information may include, for example, shore side information related to a ferry terminal. Table 2 below shows an exemplary shore side information table, including a timestamp, RSU identification information, basic shore side information. The timestamp includes, for example, time information (e.g., current time). In case where the shore side device includes an RSU, the RSU identification information is used for identifying the RSU, and may include, for example, an RSU ID. The basic shore side information may include, for example, ferry shift information, security check information (e.g., security check gate number), weighing and charging information (e.g., weighing and charging gate number), and waiting yard information.

**Table 2: shore side information table**

| Data classification | Data name |
|---|---|
| timestamp | time |
| RSU identification information | RSU ID |
| basic shore side information | ferry shift information |
| | security check information |
| | weighing and charging information |
| | waiting yard information |

In some embodiments, in case where the ferry-related device includes a ferry side device (e.g., the ferry side device 130), the ferry-related information may include, for example, ferry information related to a ferry (e.g., the ferry 140). Table 3 below shows an exemplary ferry information table, including a timestamp, RSU identification information, basic ferry information, information of an embarking/disembarking gangplank of the ferry, information of a parking environment on the ferry, information of a hydrological environment where the ferry is located, and stowage information of the ferry. The timestamp includes, for example, time information (e.g., current time). In case where the ferry side device includes an RSU, the RSU identification information is used for identifying the RSU, and may include, for example, an RSU ID. The basic ferry information includes, for example, a ferry ID, a ship tonnage, and an embarking gate number. The embarking/disembarking gangplank information may include, for example, a gangplank number, a gangplank width, a gangplank inclination angle, a gangplank friction coefficient. The parking environment information may include, for example, a parking deck number, a parking deck size, a parking deck friction coefficient, a parking lane width, and parking safety spacing. The hydrological environment information may include, for example, water surface visibility at an embarking gate, wind speed on water surface, a wind power scale, a wind direction, a wave height, a ferry horizontal-plane sway amplitude, and a ferry vertical-plane sway amplitude. The ferry stowage information may include, for example, other stowage information of the ferry than stowage of the vehicle on the ferry.

**Table 3: ferry information table**

| Data classification | Data name |
|---|---|
| timestamp | time |
| RSU identification information | RSU ID |
| basic ferry information | ferry ID |
| | ship tonnage |
| | embarking gate number |
| embarking/disembarking gangplank information | gangplank number |
| | gangplank width |
| | gangplank inclination angle |
| | gangplank friction coefficient |
| parking environment information | parking deck number |
| | parking deck size |
| | parking deck friction coefficient |
| | parking lane width |
| | parking safety spacing |
| hydrological environment information | water surface visibility at embarking gate |
| | wind speed on water surface |
| | Wind power scale |
| | wind direction |
| | wave height |
| | ferry horizontal-plane sway amplitude |
| | ferry vertical-plane sway amplitude |
| ferry stowage information | other ferry stowage information |

The ferry-related information obtained in the step S320 may include, for example, one or more items in the above Tables 2 and 3. It should be understood that the above ferry-related information is only an example, and the ferry-related information according to the embodiment of the present disclosure may also include other information related to the ferry.

In addition, the information obtained in the above steps S310 and S320 is, herein, also referred to as perception-type information, and may be obtained by, for example, perception by one or more sensors of the ferry-related device that are provided on the first vehicle. In addition, the order of the above steps 310 and S320 is not specifically limited, so that S320 may be executed first before S310, or they may be executed in parallel.

Next, in step S330, the vehicle ferry assistance information generating unit 240 generates vehicle ferry assistance information according to the vehicle information of the first vehicle obtained in the step S310 and the ferry-related information obtained in the step S320. The vehicle ferry assistance information is, herein, also referred to as service-type information, which is used for assisting the ferry of the vehicle.

In some embodiments, the vehicle ferry assistance information may include shore side service information. Table 4 below shows an exemplary shore side service information table, including a timestamp, a ferry reservation result, security check information, weighing and charging information, and waiting yard guidance information. The timestamp includes, for example, time information (e.g., current time). The ferry reservation result may include, for example, a reserved ferry shift and a vehicle license plate number. The security check result may include, for example, a check result of vehicle security check. The weighing and charging information may include, for example, an actual vehicle weight, a ferry fee. The waiting yard guidance information may include, for example, a waiting yard number, a lane number, and a parking space number.

**Table 4: shore side service information table**

| Data classification | Data name |
|---|---|
| timestamp | time |
| ferry reservation Result | reserved ferry shift |
| | vehicle license plate number |
| security check result | check result |
| weighing and charging information | actual vehicle weight |
| | ferry fee |
| waiting yard guidance information | waiting yard number |
| | lane number |
| | parking space number |

In some embodiments, the vehicle ferry assistance information may include ferry side service information. Table 5 below shows an exemplary ferry side service information table, including a timestamp, collision warning information, parking guidance information, and parking stowage information. The timestamp includes, for example, time information (e.g., current time). The collision warning information includes, for example, vehicle vertical collision risk warning information (for example, vertical-plane collision risk warning information of the vehicle with the embarking/disembarking gangplank or the like), vehicle horizontal collision risk warning information (for example, horizontal-plane collision risk warning information of the vehicle with the guardrail/cabin or the like), vehicle lateral drift risk warning information, and vehicle rollover risk warning information. The parking guidance information includes, for example, shipping space information (e.g., an entrance number), embarking gate information (e.g., an embarking gate number), deck information (e.g., a deck number), lane information (e.g., a lane number), parking space information (e.g., a parking space number), a parking space size, parking safety spacing, vehicle roll amplitude, binding and fastening information (e.g., whether binding and fastening are required). The parking stowage information includes, for example, deck information (e.g., a deck number), lane information (e.g., the number of lanes, a lane number, a distance of a lane centerline to a ship centerline, a lane safety width, a lane length, the number of lane parking spaces), parking space information (e.g., the number of parking spaces), and a vehicle license plate number.

**Table 5: ferry side service information table**

| Data classification | Data name |
|---|---|
| timestamp | time |
| collision warning information | vehicle vertical collision risk warning information |
| | vehicle horizontal collision risk warning information |
| | vehicle lateral drift risk warning information |
| | vehicle rollover risk warning information |
| parking guidance information | shipping space information |
| | embarking gate information |
| | deck information |
| | lane information |
| | parking space information |
| | parking space size |
| | parking safety spacing |
| | vehicle roll amplitude |
| | binding and fastening information |
| parking stowage information | deck information |
| | lane information |
| | parking space information |
| | vehicle license plate number |

The vehicle ferry assistance information generated in the step S330 may include, for example, one or more items of the above Tables 4 and 5. It should be understood that the above vehicle ferry assistance information is merely an example, and the vehicle ferry assistance information according to the embodiment of the present disclosure may also include other information for assisting vehicle ferry.

Next, in step S340, the vehicle ferry assistance information providing unit 250 provides the vehicle ferry assistance information generated in the step S330 to at least one of the first vehicle or the ferry-related device.

Therefore, by means of message interaction between the ferry vehicle and the ferry-related device such as the shore side device provided on the ferry terminal and the ferry side device provided on the ferry, the ferry vehicle and the ferry-related device can obtain the vehicle ferry assistance information for assisting vehicle ferry, so that service efficiency and service quality of vehicle ferry are improved.

Next, an example of message interaction in a vehicle ferry scenario 1 according to an embodiment of the present disclosure will be described with reference to Fig. 4. The vehicle ferry scenario 1 corresponds, for example, to the scenario 1 shown in Fig. 1, which is a scenario before a vehicle embarks, including, for example, vehicle ferry reservation, vehicle security check, weighing and charging, waiting yard parking, and the like.

In the present disclosure, an information link from the vehicle to the server device and an information link from the shore side device/ferry side device to the server device are described as "uplink", and an information link from the server device to the vehicle and the shore side device/ferry side device is described as "downlink". In addition, an information link from the shore side device/ferry side device to the vehicle is described as "downlink".

As shown in Fig. 4, a server device 400 (corresponding to the server device 100 in Fig. 1) obtains vehicle information from a host vehicle (HV) (corresponding to the vehicle 110 in Fig. 1) . The vehicle information may include, for example, at least one of vehicle reservation information, vehicle position information, vehicle body size information, or vehicle weight information shown in Table 1. It should be understood that HV420 and HV430 shown in Fig. 4 correspond to two implementations of the same HV , which are used for describing two message interaction modes of performing message interaction by the HV hereinafter.

In addition, the server device 400 obtains shore side information from a shore side device 410 (corresponding to the shore side device 120 in Fig. 1). The shore side information may include, for example, at least one of ferry shift information, security check information, weighing and charging information, or waiting yard information of the ferry terminal shown in Table 2.

The server device 400 generates, according to the obtained vehicle information and shore side information, at least one of a ferry reservation result, a security check result, weighing and charging information, or waiting yard guidance information of the HV, as vehicle ferry assistance information, and provides the vehicle ferry assistance information to at least one of the HV or the shore side device 410.

Two message interaction modes between the server device 400, the shore side device 410 and the HV are provided in Fig. 4. In the first message interaction mode, the HV corresponds to an HV420 of a mobile smart terminal bearing an Internet-of-Vehicles communication protocol, the HV420 being capable of providing vehicle information to the server device 400 via an Internet-of-Vehicles communication link and obtaining vehicle ferry assistance information from the server device 400 via the Internet-of-Vehicles communication link. In the second message interaction mode, the HV corresponds to an HV430 including an on board unit (OBU) based on an Internet-of-Vehicles communication protocol, the HV430 being capable of providing vehicle information to the server device 400 via an Internet-of-Vehicles communication link. In addition, in case where the shore side device 410 is carried with an RSU based on the Internet-of-Vehicles communication protocol, direct communication between the shore side device 410 and the HV430 may be made based on an Internet-of-Vehicles communication link (e. g., a PC5 link) . In this case, the server device 400 may issue vehicle ferry assistance information to the shore side device 410, and the shore side device 410 further issues the vehicle ferry assistance information to the HV 430. The above two message interaction modes can coexist, or one of the message interaction modes can be adopted as needed.

Next, a specific example of message interaction in the vehicle ferry scenario 1 shown in Fig. 4 will be described by taking a vehicle ferry security check scenario as an example.

In this scenario, the HV420 and/or the HV430 provide, to the server device 400, the vehicle information, including, for example, vehicle position, vehicle type. In some embodiments, the HV420/430 may determine the vehicle position (e.g., longitude and latitude), for example, via GPS (Global Position System), and report it to the server device 400. In addition, the HV420/430 may obtain and report vehicle type information, which may include, for example, ultra large transport vehicles, common large trucks, large buses, small trucks, small cars, and the like. In addition, in some embodiments, the vehicle information may also be sensed by the shore side device 410 and reported to the server device 400. For example, the shore side device 410 may include a high-definition camera for obtaining an image of the HV, from which a vehicle type is determined and reported to the server device 400. Furthermore, the shore side device 410 may also directly report the obtained image of the HV to the server device 400, and the server device determines the vehicle type according to the obtained image.

The shore side device 410 provides, to the server device 400, shore side information, including, for example, security check information. In some embodiments, security check information related to vehicle security check, such as intelligent identification for dangerous goods, may be provided by fusion perception of multi-source heterogeneous sensors, using a flammable and explosive hazardous liquid/gas detection sensor, an X-ray security check instrument, a high-definition camera, and the like which are included in the shore side device 410, and the security check information may be provided as the shore side information to the server device. In other embodiments, the shore side device 410 may also provide, to the server device 400, metadata sensed by the sensors (e.g., detection results of the liquid/gas detection sensor, X-ray security check instrument, high-definition camera, etc.), and the server device 400 determines security check information according to the metadata of the sensors.

The server device 400 generates, based on the vehicle information and the security check information, a security check result (e.g., whether the security check is passed), which is provided as the vehicle ferry assistance information to the HV420 and the shore side device 410, or to the HV430 via the shore side device 410. Thus, the HV can conveniently get the security check result, and the shore side device 410 can determine whether to allow the HV to pass through based on the security check result.

In the present disclosure, by using the message interaction mechanism of the vehicle ferry scenario 1 shown in Fig. 4, the functions such as ferry reservation, intelligent identification for dangerous goods, vehicle weighing, automated charging without parking, waiting yard parking guidance and the like can be achieved, improving efficiency of vehicle reservation, security check, weighing, charging and waiting at the ferry terminal, reducing vehicle queuing waiting time, and enhancing customer satisfaction. In addition, ferry turnover efficiency at the ferry terminal can be improved, reducing operation cost, and increasing income.

Next, an example of message interaction in a vehicle ferry scenario 2 according to an embodiment of the present disclosure is described with reference to Fig. 5. The vehicle ferry scenario 2 corresponds to, for example, the scenario 2 shown in Fig. 1, which is a scenario in which a vehicle embarks onto or disembarks off a ferry. Furthermore, in Fig. 5, identical or similar components with/to those in Fig. 4 are denoted by same reference numerals, and repeated descriptions thereof are omitted.

As shown in Fig. 5, the server device 400 obtains vehicle information from the HV 420/430. The vehicle information may include, for example, at least one of vehicle position information, vehicle orientation information, vehicle body size information, vehicle chassis height information, vehicle weight information, or vehicle speed information, which is shown in the Table 1.

In addition, the server device 400 obtains ferry information from a ferry side device 500 (corresponding to the ferry side device 130 in Fig. 1). The ferry information may include, for example, at least one of information of an embarking/disembarking gangplank of the ferry, information of a hydrological environment where the ferry is located, or information of a parking environment on the ferry, which is shown in the Table 3.

The server device 400 determines a collision risk of the HV with the ferry according to the obtained vehicle information and ferry information. In some embodiments, the server device 400 may further obtain vehicle information of another vehicle RV (Remote Vehicle) on the ferry, and determine a collision risk of the HV with the RV according to the vehicle information of the HV, the vehicle information of the RV, and the ferry information. In addition, in some embodiments, in case where the collision risk exceeds a preset collision risk threshold, the server device 400 may generate collision warning information, which is provided as vehicle ferry assistance information to one or more of the HV, the RV, and the ferry side device 500.

Two message interaction modes between the server device 400, the ferry side device 500, and the HV are provided in Fig. 5. In the first message interaction mode, the HV corresponds to the HV420 of a mobile smart terminal bearing an Internet-of-Vehicles communication protocol, the HV420 being capable of providing the vehicle information to the server device 400 via an Internet-of-Vehicles communication link and obtaining the vehicle ferry assistance information from the server device 400 via the Internet-of-Vehicles communication link. In the second message interaction mode, the HV corresponds to the HV430 including an on board unit (OBU) based on an Internet-of-Vehicles communication protocol, the HV430 being capable of providing the vehicle information to the server device 400 via an Internet-of-Vehicles communication link. In addition, in case where the ferry side device 500 is carried with an RSU based on the Internet-of-Vehicles communication protocol, direct communication between the ferry side device 500 and the HV430 may be made based on an Internet-of-Vehicles communication link (e.g., a PC5 link). In this case, the server device 400 may issue the vehicle ferry assistance information to the ferry side device 500, and the ferry side device 500 further issues the vehicle ferry assistance information to the HV 430. The two message interaction modes can coexist, or one message interaction mode can be adopted as needed.

Next, referring to Fig. 6, a specific example of vehicle ferry collision warning (VFCW) will be described. The VFCW includes collision warning when the HV embarks onto and disembarks off the ferry and collision warning when the HV is parked in a cabin.

As shown in Fig. 6, in step S600, the HV reports vehicle information such as a vehicle position, a chassis ground clearance, and a vehicle weight to the server device. In some embodiments, the HV may report the vehicle information to the server device, for example, periodically or in response to a control signal from the server device.

In step S610, the server device performs calculation by scenario according to ferry information reported by the ferry side device. The collision warning can include, for example, collision warning in the following two scenarios: collision warning when the HV embarks onto and disembarks off the ferry and collision warning when the HV is parked in a cabin. The server device determines whether the HV is currently in the scenario of embarking onto and disembarking off the ferry or the scenario of being parked in the cabin, for example, according to the vehicle position in the vehicle information reported by the HV, and accordingly determines the collision risk by scenario.

Steps S620-S640 correspond to the scenario where the HV embarks onto and disembarks off the ferry.

In step S620, the server device calculates a vertical-plane collision risk of the HV with the ferry gangplank. As shown in Fig. 1, in the scenario 2, the HV is located on a ferry embarking gangplank 150, which is typically inclined onto the shore at an angle of 35°-45° . When the HV embarks (the case of disembarking is similar), there may be a collision risk on a vertical plane with the gangplank (for example, a bump 160 of an HV chassis with the ferry gangplank shown in Fig. 1) due to the influence of sea surface wind and waves or the like. In some embodiments, the server device may calculate the vertical-plane collision risk of the HV with the ferry gangplank in real time, according to a ferry vertical-plane (Z-axis) sway amplitude, a ferry gangplank inclination angle, a vehicle chassis ground clearance, a vehicle speed, and the like. The ferry vertical-plane (Z-axis) sway amplitude, the ferry gangplank inclination angle and the vehicle chassis ground clearance are included in the ferry information reported by the ferry side device, and the vehicle speed is included in the vehicle information.

In step S630, the server device calculates a horizontal-plane collision risk of the HV with the ferry. In some cases, due to the influence of sea surface wind and waves or the like, when the HV embarks or disembarks, the HV may have a collision risk on a horizontal plane with an entrance hatch of the ferry, a cabin, a guardrail, etc. and a falling-into-water risk (e.g., the HV deviating from a centerline of the gangplank too much may cause falling into water). The server device can calculate an offset risk and an offset distance of the vehicle with respect to the centerline of the ferry gangplank/hatch in real time, for example, according to a ferry horizontal-plane (XY axes) sway amplitude, a gangplank width, a gangplank friction coefficient, a wind speed on water surface, a vehicle weight/size/direction angle/speed and the like, and further calculate the horizontal-plane collision risk of the HV with the ferry and the falling-into-water risk in real time. The ferry horizontal-plane (XY axes) sway amplitude, the gangplank width, the gangplank friction coefficient and the wind speed on water surface are included in the ferry information reported by the ferry, and the vehicle weight/size/direction angle/speed is included in the vehicle information.

While the reporting of the vehicle information by the HV is described above, it should be understood that in some embodiments, the vehicle information may also be sensed by the ferry side device or shore side device and reported to the server device. For example, the size, speed, etc. of the vehicle may be sensed using a radar provided on the shore side, the weight of the vehicle may be measured using a weighbridge provided on the shore side, and so on.

In step S640, in case where the vertical/horizontal-plane collision risk/falling-into-water risk exceeds the preset collision risk threshold, collision warning information may be generated and provided to the HV, to issue a collision warning and/or falling-into-water warning to a driver of the HV, so as to prompt the driver to take measures such as reducing the vehicle speed and adjusting the driving direction and angle of the vehicle in time. In some embodiments, warning time can be set properly to ensure that the HV driver has enough time to take measures after receiving the warning, to avoid the collision and bump with the ferry gangplank, guardrail and the like.

Steps S650 to S670 correspond to the scenario of parking of the HV in the cabin. In the scenario of parking of the HV in the cabin, the HV and the RV are parked on a deck in the ferry cabin. In some cases, due to the influence of sea surface wind and waves or the like, when the HV is parked in the cabin, a forward/backward movement and a leftward/rightward lateral drift may arise, thereby causing a collision risk with another vehicle (e.g., a collision 170 shown in Fig. 1 occurs).

In step S650, the server device calculates a risk of the forward/backward movement and leftward/rightward lateral drift of the HV. The server device can calculate the risk of the forward/ backward movement and leftward/rightward lateral drift of the vehicle, for example, according to horizontal-plane (XY axes) and vertical-plane (Z-axis) sway amplitudes of the ferry, a parking deck friction coefficient, a vehicle weight/size, parking safety spacing and the like.

In step S660, the server device calculates a collision risk of the HV with the RV (e.g., another vehicle located in the front, back, left, or right of the HV) . The server device may, for example, obtain a vehicle drift distance of the HV that is perceived and reported by the ferry side device, the vehicle information (e.g., position information) of the RV, and the like, and calculate the collision risk of the HV with the RV. The vehicle information of the RV can be obtained and reported by the RV, or perceived and reported by the ferry side device.

In step S670, in case where the collision risk exceeds the preset collision risk threshold, collision warning information may be generated and provided to the HV, to issue a collision warning to a driver of the HV, so as to prompt the driver to adjust the vehicle position in time. In some embodiments, warning time may be set properly to ensure that the HV driver has enough time to take measures after receiving the warning, to avoid the collision with the HV.

According to the embodiment of the present disclosure, when the HV embarks onto and disembarks off the ferry and is parked in the cabin, the ferry side device can perceive the shore environment when the HV embarks, the cabin environment, surrounding vehicles parked in the cabin and the like, and when there is a collision risk of the HV with the ferry gangplank, the guardrail, the cabin, or surrounding vehicles parked in the cabin that is caused by factors such as ferry sway due to wind and waves, it can warn the HV driver. Therefore, the driver of the HV can be assisted in avoiding or reducing accidents such as a skid of the vehicle into water, a collision of the vehicle with the guardrail, a bump of the vehicle chassis into the gangplank when the vehicle embarks onto and disembarks off the ferry, so that the safety of embarking and disembarking of the vehicle is promoted. In addition, collision and scratch accidents between vehicles that are caused by sway due to wind and waves, and the like when the vehicle are densely parked in the cabin can be reduced, so that the safety of parking during vehicle ferry is improved.

In some embodiments, the collision warning information of the present disclosure may be used for prompting at least one of: a type of the collision risk, a relative position of a collision risk target to the HV, a relative distance of the collision risk target to the HV, a collision risk level, a type of the collision risk target. The type of the collision risk is used, for example, for illustrating which type of risk/information prompt, for example: the vertical-plane collision risk of the vehicle with the ferry gangplank, the horizontal-plane collision risk of the vehicle with the guardrail/cabin and the like, the risk of forward/backward movement and leftward/rightward lateral drift of the vehicle, and the like. The relative position of the collision risk target to the HV includes, for example, positions of the barrier such as the ferry gangplank and the guardrail and a risk RV with respect to the HV, including one or more of front, rear, left, right, left front, right front, left rear, or right rear. The relative distance of the collision risk target to the HV includes, for example, distances of the barrier such as the ferry gangplank and the guardrail and the surrounding parked RV with respect to the HV, such as a vertical-plane distance between the chassis of the HV and the ferry gangplank, a horizontal-plane distance between the HV and the barrier such as the guardrail, a horizontal-plane distance between the HV and the surrounding parked RV, and the like. The collision risk level is used for evaluating a level of the collision risk, so that according to different risk levels, a user can be given different prompts, such as high, medium and low levels of prompts. The type of the collision risk target includes, for example, the barrier such as the ferry gangplank and the guardrail, the surrounding vehicle parked, and the like.

Next, an example of message interaction in a vehicle ferry scenario 3 according to an embodiment of the present disclosure is described with reference to Fig. 7. The vehicle ferry scenario 3 corresponds to, for example, the scenario 3 shown in Fig. 1, which is a scenario after the vehicle embarks. The message interaction in the vehicle ferry scenario 3 is used for providing parking guidance for parking of a plurality of vehicles after embarking.

As shown in Fig. 7, the server device 400 obtains vehicle information of a plurality of vehicles (for example, a plurality of vehicles 110) from a plurality of different HVs 420 and/or 430 (obtaining vehicle information from only one vehicle is exemplified in Fig. 7) . The vehicle information of each vehicle may include, for example, at least one of vehicle position information, vehicle body size information, vehicle weight information, vehicle type information, or vehicle center-of-gravity information shown in the Table 1.

In addition, the server device 400 obtains ferry information from the ferry side device 500 (corresponding to the ferry side device 130 in Fig. 1). The ferry information may include, for example, at least one of stowage information of the ferry, information of a parking environment on the ferry, or information of a hydrological environment where the ferry is located, which is shown in the Table 3.

The server device 400 generates, according to the obtained vehicle information of the plurality of vehicles and the ferry information, parking guidance information for guiding the plurality of vehicles to park on the parking deck, which is provided as vehicle ferry assistance information to the plurality of vehicles and/or the ferry side device.

The message interaction in the vehicle ferry scenario 3 shown in Fig. 7 is similar to the message interaction in the vehicle ferry scenario 2 shown in Fig. 5, and the two differ from each other in that, the server device 400 obtains the vehicle information of the plurality of vehicles and generates the parking guidance information according to the vehicle information and the ferry information, and other message interaction details are similar to the message interaction in the vehicle ferry scenario 2 shown in Fig. 5 (for example, the message interaction also includes a first message interaction mode and a second message interaction mode), which are not repeated herein.

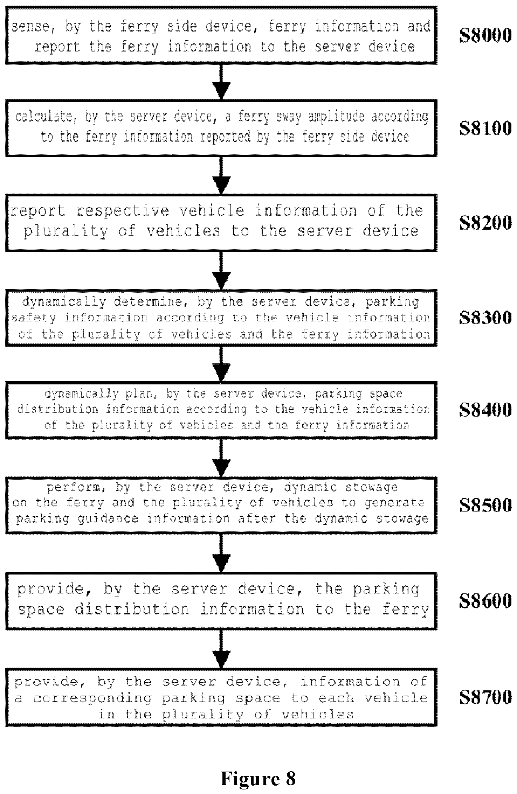

Next, referring to Fig. 8, an example of vehicle ferry stowage and parking guidance (VFSPG) according to an embodiment of the present disclosure will be described.

As shown in Fig. 8, in step S8000, the ferry side device senses ferry information and reports the ferry information to the server device. The ferry information may include, for example, hydrographic environment information such as a surrounding wind power scale, a wind direction, and a wave height, parking environment information such as a parking deck friction coefficient, and basic ferry information such as a ship tonnage.

In step S8100, the server device calculates a ferry sway amplitude (e.g., a ferry horizontal-plane sway amplitude and a ferry vertical-plane sway amplitude) according to the ferry information (e.g., the ship tonnage, the wind power scale, the wind direction, and the wave height) reported by the ferry side device. In addition, the server device can feed back the ferry sway amplitude as ship stability information to the ferry.

In step S8200, the plurality of vehicles report their respective vehicle information to the server device, or the shore side device/ferry side device senses vehicle information of the plurality of vehicles and reports the vehicle information to the server device. The vehicle information includes, for example, vehicle weight, vehicle center-of-gravity information, and the like.

In step S8300, the server device dynamically determines parking safety information according to the vehicle information of the plurality of vehicles and the ferry information. In some embodiments, the parking safety information may include, for example, a size of a parking space for each vehicle, parking safety spacing, a vehicle roll amplitude, and whether binding and fastening are required. The roll amplitude of the vehicle can be calculated, for example, according to the ferry sway amplitude calculated in the step S8100, the vehicle center of gravity in the vehicle information, and the like. The parking safety spacing and the parking space size can be calculated, for example, according to the ferry sway amplitude calculated in the step S8100, and the vehicle weight, vehicle size, vehicle type, and the like in the vehicle information. In addition, whether binding and fastening are required can be comprehensively determined according to the size of the parking space, the parking safety spacing, and the vehicle roll amplitude for each vehicle. In some embodiments, the parking safety information may be provided as vehicle ferry assistance information to the corresponding vehicle and the ferry, to make safety warning.

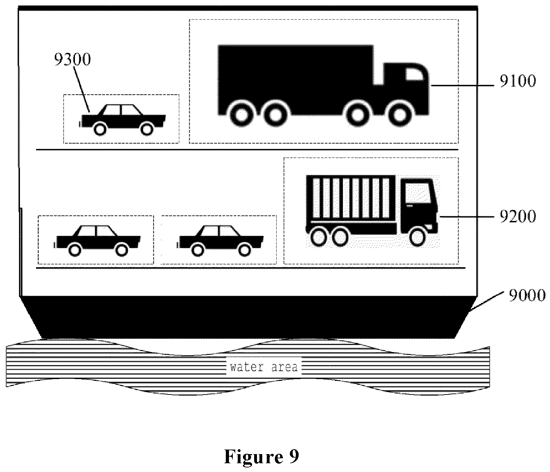

Fig. 9 illustrates a schematic diagram of safety spacing between ferry parking spaces for different vehicles. As shown in Fig. 9, on a cabin deck of a ferry 9000, one ultra-large transport vehicle 9100, one common large truck 9200 and three small cars 9300 are parked. Because dense parking of different types of vehicles that are in close proximity to each other is prone to safety accidents such as collisions, the safety spacing between the parking spaces for the different vehicles needs to be flexibly calculated according to the vehicle roll amplitude, size and the like, to ensure the parking safety of the vehicles parked in the cabin on the sea surface in certain wind and wave scales. The safety spacing between the parking spaces can be calculated, for example, in the step S8300 shown in Fig. 8. A dashed box outside the vehicle in Fig. 9 depicts parking safety spacing for a corresponding vehicle, wherein the parking safety spacing for the ultra-large transport vehicle 9100 is greater than that for the common large truck 9200, and the parking safety spacing for the common large truck 9200 is greater than that for the small car 9300.

Table 6 below exemplifies the parking safety spacing for different types of vehicles on a 10-thousand-tonnage ro-ro passenger ship in different sea surface wind power, wave height, etc. environments.

**Table 6: parking safety information table of 10-thousand-tonnage ro-ro passenger ship**

| Wind power (scale) | Wave height (meter) | vehicle type | Parking safety spacing (meter) | Vehicle roll amplitude (angle) | Binding and fastening (Yes/No) |
|---|---|---|---|---|---|
| 0 ~ 5 | 0 ~ 2.5 (0 ~ 4th scale) | Ultra-large transport vehicle | 1.0 | <4° | No |
| | | common large truck | 0.8 | <4° | No |
| | | Large bus | 0.8 | <4° | No |
| | | Small truck | 0.5 | <4° | No |
| | | Small Car | 0.5 | <4° | No |
| 6 ~ 7 | 2.5 ~ 4.0 (5th scale) | Ultra-large transport vehicle | 1.5 | 4°~ 8° | Yes |
| | | common large truck | 1.0 | 4°~ 8° | Yes |
| | | Large bus | 1.0 | 4°~ 8° | No |
| | | Small truck | 0.8 | 4°~ 8° | No |
| | | Small Car | 0.8 | 4°~ 8° | No |
| 8 ~ 9 | 4.0 ~ 6.0 (6th scale) | Ultra-large transport vehicle | 2.0 | >8° | Yes |
| | | common large truck | 1.5 | >8° | Yes |
| | | Large bus | 1.5 | >8° | Yes |
| | | Small truck | 1.0 | >8° | Yes |
| | | Small Car | 1.0 | >8° | Yes |
| >9 | >6.0 | NA | NA | NA | NA |

From the above Table 6, the following information can be derived:
(1) in the environment with the sea surface wind power below the 5th scale and the wave height of 0-2.5 meters (below 4th-scale moderate waves), the parking safety spacing for different types of vehicles is 0.5-1.0 meter, without binding and fastening;
(2) in the environment with the sea surface wind power of 6th-7th scales and the wave height of 2.5-4.0 meters (5th-scale waves), the parking safety spacing for different types of vehicles is 0.8-1.5 meters, and binding and fastening are required only for the ultra-large truck and the large truck;
(3) in the environment with the sea surface wind power of 8th-9th scales and the wave height of 4.0-6.0 meters (6th-scale waves), the parking safety spacing for different types of vehicles is 1.0-2.0 meters, and binding and fastening are required for all the vehicles; and
(4) after the sea surface wind power is greater than the 9th scale and the wave height is greater than 6 meters, it is recommended that the ship be suspended from sailing.

Continually referring to Fig. 8, in step S8400, the server device dynamically plans parking space distribution information according to the vehicle information of the plurality of vehicles and the ferry information. For example, the server device may calculate a safe width of a lane on the parking deck, plan an optimal number of lanes, a lane width/length, calculate a distance of a centerline of each lane to a ship centerline, and the like, according to the parking environment information such as a parking deck size, and a parking lane width.

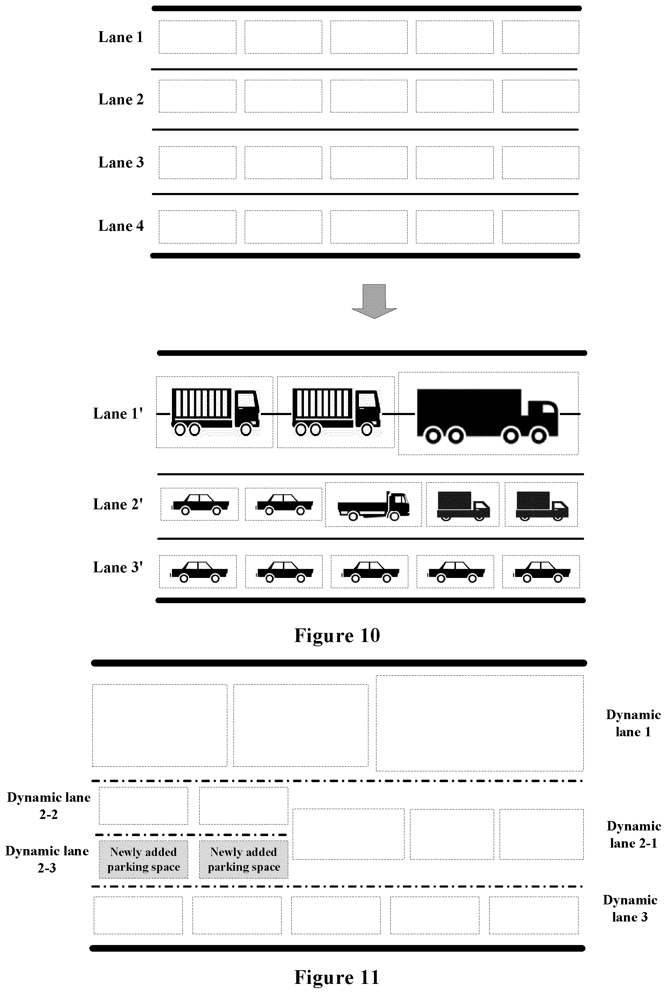

Fig. 10 illustrates an example diagram of parking of different types of vehicles based on fixed lanes and fixed parking spaces, and Fig. 11 illustrates a schematic diagram of dynamic planning of parking space distribution according to an embodiment of the present disclosure.

In the upper part of Fig. 10, four fixed lanes 1 to 4 are shown, a parking area of each lane being fixed. When a large truck shown in the lower part of Fig. 10 is parked, 2 fixed lanes need to be occupied. At this time, the fixed lanes 1 and 2 are merged into a lane 1', which may cause a waste of parking space.

In contrast, as shown in Fig. 11, in the present disclosure, the lane safety width is calculated according to the safety spacing between parking spaces for different vehicles, and then dynamic lanes 1, 2-1, 2-2, 2-3, and 3 are provided. The dynamic lane 1 is still thereon parked with large trucks, but the dynamic lane 1 has a less width than the lane 1' in Fig. 10 (e.g. it occupies the original 1 and a half fixed lanes, whereas the lane 1' in Fig. 10 occupies the original 2 fixed lanes) . By means of this dynamic planning, more space can be freed for loading more vehicles. For example, in Fig. 11, compared to Fig. 10, two newly added parking spaces are obtained.

Referring back to Fig. 8, in step S8500, the server device performs dynamic stowage on the ferry and the plurality of vehicles to generate parking guidance information after the dynamic stowage. For example, the server device may perform cabin stowage by matching a ship center-of-gravity balance, to adjust the parking space distribution dynamically planned in the step S8400.

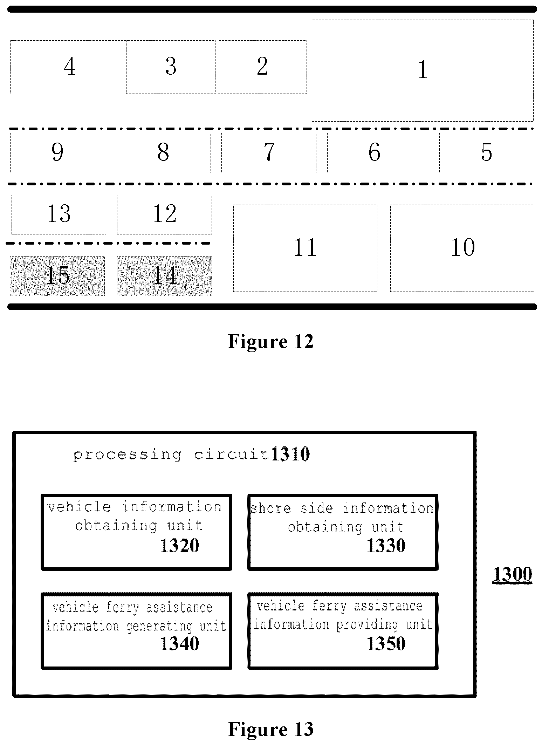

Fig. 12 illustrates a schematic diagram of parking space distribution after dynamic stowage. As shown in Fig. 12, in consideration of a ship horizontal center-of-gravity balance matching, vehicle stowage is performed such that a light-weight small vehicle is parked in a middle lane (for example, parking spaces 5 to 9 suitable for parking of small vehicles are provided in the middle lane), and a heavy-weight truck is parked in lanes on both sides of the ship (for example, parking spaces 1, 10, 11 suitable for parking of large vehicles are provided in the lanes on the both sides). In addition, according to the dynamic stowage, positions of other parking spaces 2-4, 12-15 (wherein parking spaces 14 and 15 correspond to the newly added parking spaces in Fig. 11) are reasonably provided. In addition, 1 to 15 in Fig. 12 represent the sequence of entry of the vehicles into the cabin, which may also be determined after the dynamic stowage.

In step S8600, the server device provides the parking space distribution information to the ferry for the ferry to display, the parking space distribution (for example, information such as parking lanes, parking spaces, and license plate numbers of vehicles to be parked) on the parking deck (such as an intelligent deck with a display function), thereby facilitating guidance of parking of the vehicles in the sequence of entry.

In step S8700, the server device provides, to each vehicle in the plurality of vehicles, information of a corresponding parking space, such as a deck layer, lane, and parking space for parking of the vehicle, and gives the sequence of entry of the vehicles into cabins, thereby facilitating guidance of parking of the vehicles.

According to the VFSPG of the present disclosure, it is able to improve the center-of-gravity distribution balance and the anti-wind/wave ability of the ferry, reduce ship sway, promote riding comfort. In addition, it is able to flexibly arrange the number of vehicles carried by the ferry under the condition of ensuring the safety of the vehicles in the cabin, maximize the number of the carried vehicles, and improve the utilization ratio of parking space in the cabin.

The message interaction mechanism for assisting vehicle ferry according to the embodiment of the present disclosure has been described above by referring to Figs. 2 to 11, in which vehicle information and ferry-related information are obtained by a server device, and vehicle ferry assistance information is generated based on this information. In some embodiments, an MEC device may be arranged in the vicinity of the server device for calculating and generating the vehicle ferry assistance information. In addition, the server device described in this disclosure may also be configured to include the MEC device.

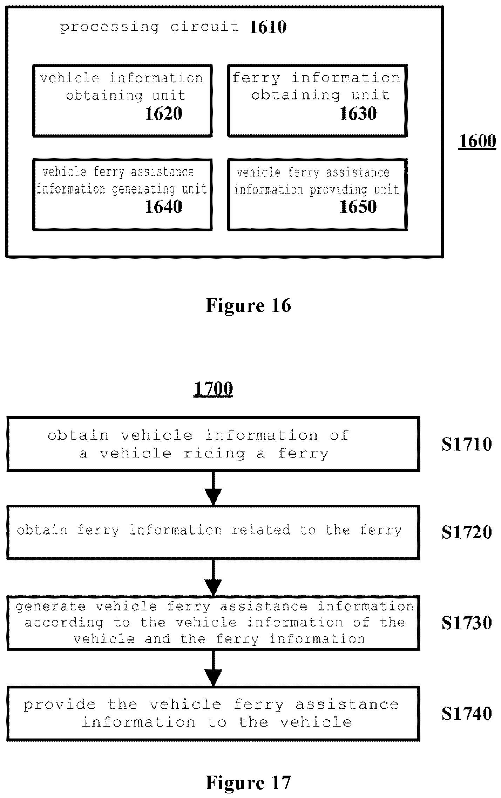

In other embodiments, unlike the message mechanism described with reference to Figs. 2 to 11, it is also possible to obtain vehicle information and ferry-related information by a ferry-related device (e.g., a shore side device, a ferry side device), and generate vehicle ferry assistance information based on this information. In this case, an MEC device may be arranged in the vicinity of the ferry-related device (e.g., the vicinity of the shore side device, the vicinity of the ferry side device), for calculating and generating the vehicle ferry assistance information. In addition, the ferry-related device described in this disclosure may also be configured to include the MEC device. Next, the shore side device and the ferry side device in the above message mechanism will be specifically described with reference to Figs. 13 to 18, where Figs. 13 to 15 correspond to an embodiment in which the vehicle ferry assistance information is generated by the shore side device, and Figs. 16 to 18 correspond to an embodiment in which the vehicle ferry assistance information is generated by the ferry side device.

Fig. 13 illustrates an exemplary configuration block diagram of an electronic device 1300 for a shore side device provided on a ferry terminal according to an embodiment of the present disclosure. The shore side device may correspond, for example, to the shore side device 120 shown in Fig. 1.

In some embodiments, the electronic device 1300 may comprise a processing circuit 1310. The processing circuit 1310 of the electronic device 1300 provides various functions of the electronic device 1300. In some embodiments, the processing circuit 1310 of the electronic device 1300 may be configured to perform a communication method for the shore side device.

The processing circuit 1310 may refer to various implementations of digital circuitry, analog circuitry, or mixed-signal (a combination of analog and digital signals) circuitry that perform functions in a computing system. The processing circuit may include, for example, a circuit such as an integrated circuit (IC) and an application specific integrated circuit (ASIC), circuits of an individual processor core or part thereof, an entire processor core, an individual processor, a programmable hardware device such as a field programmable gate array (FPGA), and/or a system including a plurality of processors.

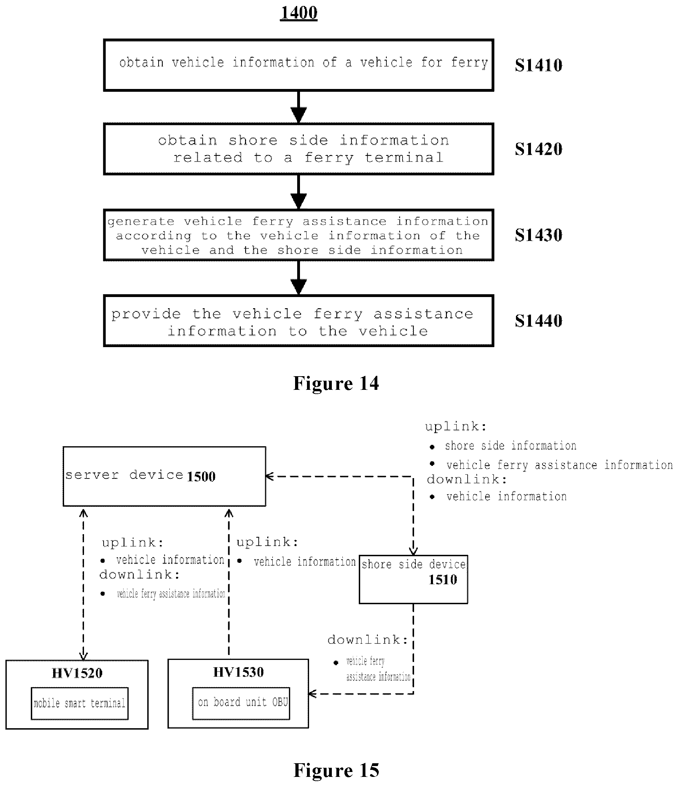

In some embodiments, the processing circuit 1310 may comprise a vehicle information obtaining unit 1320, a shore side information obtaining unit 1330, a vehicle ferry assistance information generating unit 1340, and a vehicle ferry assistance information providing unit 1350, which are respectively configured to perform steps S1410 to 1440 in a communication method 1400 for a shore side device shown in Fig. 14, which will be described later.

In some embodiments, the electronic device 1300 may also include a memory (not shown). The memory of the electronic device 1300 may store information generated by the processing circuit 1310 as well as program and data for operations of the electronic device 1310. The memory may be a volatile memory and/or a non-volatile memory. For example, the memory may include, but is not limited to, a random access memory (RAM), dynamic random access memory (DRAM), static random access memory (SRAM), read-only memory (ROM), and flash memory. In addition, the electronic device 1300 may be implemented at a chip level or at a device level by including other external components.

Fig. 14 illustrates an example flowchart of a communication method 1400 for a shore side device according to an embodiment of the present disclosure. The communication method may be used, for example, in the electronic device 1300 as shown in Fig. 13. The communication method 1400 for the shore side device shown in Fig. 14 may be used, for example, for message interaction in the vehicle ferry scenario 1 (corresponding to the scenario 1 in Fig. 1). Fig. 15 illustrates an example of message interaction in the vehicle ferry scenario 1, where a shore side device 1510 performs the communication method 1400 for the shore side device described in Fig. 14.

Next, the message interaction in the vehicle ferry scenario 1 according to the embodiment of the present disclosure will be described in detail with reference to Figs. 14 and 15.

As shown in Fig. 15, the shore side device 1510 obtains vehicle information of an HV for ferry (corresponding to step S1410 of Fig. 14). In some embodiments, the shore side device 1510 obtains the vehicle information of the HV from a server device 1500 via an Internet-of-Vehicles communication link. Similar to the two message interaction modes described above with reference to Fig. 4, it is possible to provide the vehicle information to the server device 1500 via an Internet-of-Vehicles communication link by an HV1520 of a mobile smart terminal bearing an Internet-of-Vehicles communication protocol, or by an HV430 of an on board unit (OBU) based on an Internet-of-Vehicles communication protocol. In some embodiments, the shore side device 1510 may comprise one or more sensors, via which the vehicle information of the HV may be sensed.

In addition, the shore side device 1510 obtains shore side information related to a ferry terminal (corresponding to step S1420 of Fig. 14). In some embodiments, the shore side information may be sensed by using the one or more sensors comprised in the shore side device 1510.

The shore side device 1510 generates vehicle ferry assistance information according to the obtained vehicle information and shore side information (corresponding to step S1430 of Fig. 14).

In addition, the shore side device 1510 provides the vehicle ferry assistance information to the HV (corresponding to step S1440 of Fig. 14) . In some embodiments, as shown in Fig. 15, the shore side device 1510 (e.g., comprising an RSU) can perform direct communication with the HV1530 via an Internet-of-Vehicles communication link (e.g., a PC5 link) to provide the vehicle ferry assistance information to the HV 1530. In other embodiments, as shown in Fig. 15, the shore side device 1510 may provide the vehicle ferry assistance information (e.g., via an Internet-of-Vehicles communication link) to the server device 1500, and the vehicle ferry assistance information is provided by the server device 1500 (e.g., via an Internet-of-Vehicles communication link) to the HV 1520. The two message interaction modes can coexist, or one of the message interaction modes can be adopted as needed.

In some embodiments, the shore side device 1510 also provides the shore side information to the server device 1500, for the server device 1500 to store and manage the shore side information. In addition, the server device 1500 can also obtain and store vehicle information from the HV and other RVs, thereby comprehensively managing and controlling the ferry-related information.

In the embodiments described above with reference to Figs. 13 to 15, specific contents of the vehicle information, the shore side information, and the vehicle ferry assistance information are the same as those of the embodiments described with reference to Fig. 2 to 12, and thus are not repeated herein.

Fig. 16 illustrates an exemplary configuration block diagram of an electronic device 1600 for a ferry side device provided on a ferry according to an embodiment of the present disclosure. The ferry side device may correspond to, for example, the ferry side device 130 shown in Fig. 1.

In some embodiments, the electronic device 1600 may comprise a processing circuit 1610. The processing circuit 1610 of the electronic device 1600 provides various functions of the electronic device 1600. In some embodiments, the processing circuit 1610 of the electronic device 1600 can be configured to perform a communication method for the ferry side device.

The processing circuit 1610 may refer to various implementations of digital circuitry, analog circuitry, or mixed-signal (a combination of analog and digital signals) circuitry that performs functions in a computing system. The processing circuit may include, for example, a circuit such as an integrated circuit (IC) and an application specific integrated circuit (ASIC), circuits of an individual processor core or part thereof, an entire processor core, an individual processor, a programmable hardware device such as a field programmable gate array (FPGA), and/or a system including a plurality of processors.

In some embodiments, the processing circuit 1610 may comprise a vehicle information obtaining unit 1620, a ferry information obtaining unit 1630, a vehicle ferry assistance information generating unit 1640, and a vehicle ferry assistance information providing unit 1650, which are respectively configured to perform steps S1710 to 1740 in a communication method 1700 for a ferry side device shown in Fig. 17, which will be described later.

In some embodiments, the electronic device 1600 may also include a memory (not shown). The memory of the electronic device 1600 may store information generated by the processing circuit 1610, as well as program and data for operations of the electronic device 1610. The memory may be a volatile memory and/or a non-volatile memory. For example, the memory may include, but is not limited to, a random access memory (RAM), dynamic random access memory (DRAM), static random access memory (SRAM), read-only memory (ROM), and flash memory. In addition, the electronic device 1600 may be implemented at a chip level or at a device level by including other external components.

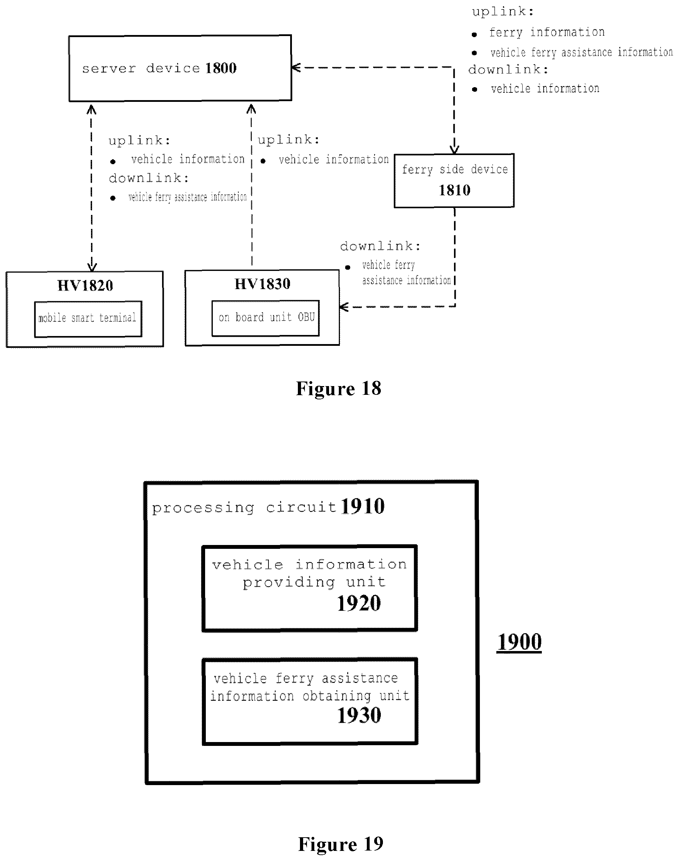

Fig. 17 illustrates an example flowchart of a communication method 1700 for a ferry side device according to an embodiment of the present disclosure. The communication method can be used, for example, in the electronic device 1600 shown in Fig. 16. The communication method 1700 for the shore side device shown in Fig. 17 may be used, for example, for performing message interaction in vehicle ferry scenarios 2 and 3 (corresponding to the scenarios 2 and 3 in Fig. 1) . Fig. 18 illustrates an example of message interaction according to the vehicle ferry scenarios 2 and 3, where the ferry side device 1810 performs the communication method 1700 for the ferry side device described in Fig. 17.

Next, the message interaction in the vehicle ferry scenarios 2 and 3 according to the embodiment of the present disclosure will be described in detail with reference to Figs. 17 and 18. It should be understood that message interaction modes in the vehicle ferry scenarios 2 and 3 are the same, with an exception of different specific content included in the vehicle ferry assistance information. In the vehicle ferry scenario 2, the vehicle ferry assistance information may include collision warning information, and in the vehicle ferry scenario 3, the vehicle ferry assistance information may include parking guidance information. In the following description, a general description will be made without distinguishing the vehicle ferry scenarios 2 and 3.

As shown in Fig. 18, the ferry side device 1810 obtains vehicle information of an HV riding a ferry (corresponding to step S1710 of Fig. 17). In some embodiments, the ferry side device 1810 obtains the vehicle information of the HV from the server device 1800 via an Internet-of-Vehicles communication link. Similar to the two message interaction modes described above with reference to Fig. 4, the vehicle information may be provided to the server device 1800 via an Internet-of-Vehicles communication link by an HV1820 of a mobile smart terminal bearing an Internet-of-Vehicles communication protocol, or by an HV1830 including an on board unit (OBU) based on an Internet-of-Vehicles communication protocol. In some embodiments, the ferry side device 1810 may include one or more sensors, via which the vehicle information of the HV may be sensed.

In addition, the ferry side device 1810 obtains ferry information related to the ferry (corresponding to step S1720 of Fig. 17) . In some embodiments, the ferry information may be sensed by using the one or more sensors included in the ferry side device 1810.

The ferry side device 1810 generates vehicle ferry assistance information according to the obtained vehicle information of the HV and ferry information (corresponding to step S1730 of Fig. 17).

In addition, the ferry side device 1810 provides the vehicle ferry assistance information to the HV (corresponding to step S1740 of Fig. 17) . In some embodiments, as shown in Fig. 18, the ferry side device 1810 (e.g., including an RSU) can perform direct communication with the HV1830 via an Internet-of-Vehicles communication link (e.g., a PC5 link), to provide the vehicle ferry assistance information to the HV 1830. In other embodiments, as shown in Fig. 18, the ferry side device 1810 may provide the vehicle ferry assistance information (e.g., via an Internet-of-Vehicles communication link) to the server device 1800, by which the vehicle ferry assistance information is provided (e.g., via an Internet-of-Vehicles communication link) to the HV1820. The two message interaction modes can coexist, or one message interaction mode can be adopted as needed.

In some embodiments, the ferry side device 1810 also provides the ferry information to the server device 1800, for the server device 1800 to store and manage the ferry information. In addition, the server device 1800 also obtains and stores vehicle information from the HV and other RVs, thereby comprehensively managing and controlling the ferry-related information.

In the embodiments described above with reference to Figs. 16 to 18, specific contents of the vehicle information, the ferry information, and the vehicle ferry assistance information are the same as those in the embodiments described with reference to Figs. 2 to 12, and will not be repeated herein.

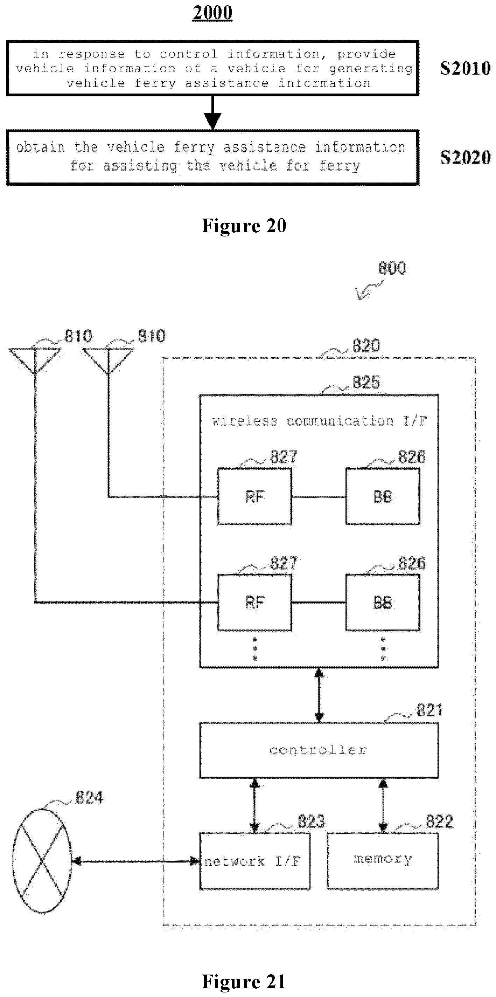

Next, a vehicle according to an embodiment of the present disclosure will be described with reference to Figs. 19 and 20.

Fig. 19 illustrates an exemplary configuration block diagram of an electronic device 1900 for a vehicle side according to an embodiment of the present disclosure. The vehicle may correspond to, for example, the vehicle 110 shown in Fig. 1.

In some embodiments, the electronic device 1900 may comprise a processing circuit 1910. The processing circuit 1910 of the electronic device 1900 provides various functions of the electronic device 1900. In some embodiments, the processing circuit 1910 of the electronic device 1900 may be configured to perform a communication method for a vehicle.

The processing circuit 1910 may refer to various implementations of digital circuitry, analog circuitry, or mixed-signal (a combination of analog and digital signals) circuitry that perform functions in a computing system. The processing circuit may include, for example, a circuit such as an integrated circuit (IC) and an application specific integrated circuit (ASIC), circuits of an individual processor core or part thereof, an entire processor core, an individual processor, a programmable hardware device such as a field programmable gate array (FPGA), and/or a system including a plurality of processors.

In some embodiments, the processing circuit 1910 may comprise a vehicle information providing unit 1920 and a vehicle ferry assistance information obtaining unit 1930, which are respectively configured to perform steps S2010 and S2020 in a communication method 2000 for a vehicle shown in Fig. 20, which will be described later.

In some embodiments, the electronic device 1900 may also include a memory (not shown). The memory of the electronic device 1900 may store information generated by the processing circuit 1910 as well as program and data for operations of the electronic device 1910. The memory may be a volatile memory and/or a non-volatile memory. For example, the memory may include, but is not limited to, a random access memory (RAM), dynamic random access memory (DRAM), static random access memory (SRAM), read-only memory (ROM), and flash memory. In addition, the electronic device 1900 may be implemented at a chip level or at a device level by including other external components.

Fig. 20 illustrates an example flowchart of a communication method 2000 for a vehicle according to an embodiment of the present disclosure. The communication method can be used, for example, in the electronic device 1900 shown in Fig. 19.

As shown in Fig. 20, in step S2010, the vehicle information providing unit 1920, in response to control information, provides vehicle information of a vehicle for generating vehicle ferry assistance information. In some embodiments, the control information may be sent by a server device to the vehicle, and in response to the control information, the vehicle provides the vehicle information to the server device. In other embodiments, the control information may be sent by a ferry-related device (e.g., a shore side device, a ferry side device), the vehicle provides the vehicle information to the server device in response to the control information, and via the server device, the vehicle information is provided to the ferry-related device. In some embodiments, the ferry-related device may periodically broadcast the control information, so that the vehicle receives the control information when entering a control range of the ferry-related device and performs corresponding operation in response to the control information.

In some embodiments, the vehicle may include one or more sensors, via which the vehicle information is sensed in response to the control information. In some embodiments, the control information may include indication information indicating which vehicle information the vehicle provides, so that the vehicle provides the vehicle information accordingly according to the indication information, for example, causing a corresponding sensor of the vehicle to sense the vehicle information. Thus, the server device or the ferry-related device can generate the vehicle ferry assistance information according to the vehicle information provided by the vehicle.

In step S2020, the vehicle ferry assistance information obtaining unit 1930 obtains, from the server device or the ferry-related device, the vehicle ferry assistance information for assisting the vehicle for ferry.

In some embodiments, the vehicle may include an on board unit (OBU) based on an Internet-of-Vehicles communication protocol, and be configured to obtain the vehicle ferry assistance information from the ferry-related device via an Internet-of-Vehicles communication link. The ferry-related device may include an RSU based on the Internet-of-Vehicles communication protocol, and can make direct communication with the OBU based on an Internet-of-Vehicles communication link (e.g., a PC5 link), to provide the vehicle ferry assistance information to the OBU.

In some embodiments, the vehicle may include a mobile smart terminal bearing an Internet-of-Vehicles communication protocol, and be configured to obtain the vehicle ferry assistance information from the server device via an Internet-of-Vehicles communication link. The mobile smart terminal can be, for example, a smart terminal such as a mobile phone, a tablet, and a smart watch, which can support Internet-of-Vehicles communication of an application layer by loading the Internet-of-Vehicles protocol (for example, installing an application supporting the Internet-of-Vehicles protocol, and the like).

In the embodiment described above with reference to Figs. 19 and 20, the specific content of the vehicle information and the vehicle ferry assistance information are the same as those in the embodiment described with reference to Figs. 2 to 12, and will not be repeated herein.

An application example according to the present disclosure will be described below.

The techniques of this disclosure can be applied to a variety of products.

The shore side device and/or ferry side device of the present disclosure may be implemented, for example, using a road side unit (RSU) in an Internet of Vehicles.

The electronic device for a vehicle side of the present disclosure may be implemented, for example, using a terminal device.

For example, the terminal device may be implemented as a mobile terminal (such as a smartphone, a tablet personal computer (PC), a notebook PC, a portable game terminal, a portable/dongle-type mobile router, and a digital camera device), or an on board terminal such as a car navigation device. The terminal device may also be implemented as a terminal that performs machine-to-machine (M2M) communication (also referred to as a machine type communication (MTC) terminal). Furthermore, the terminal device may be a wireless communication module (such as an integrated circuit module including a single chip) mounted on each of the above terminals.

### [Application examples regarding RSU]

### (First application example)

Fig. 21 is a block diagram illustrating a first example of a schematic configuration of an RSU to which the technique of this disclosure can be applied. The RSU 800 includes one or more antennas 810 and a road side device 820. The road side device 820 and each antenna 810 may be connected to each other via an RF cable.

Each of the antennas 810 includes a single or plurality of antenna elements, such as a plurality of antenna elements included in a multi-input-multi-output (MIMO) antenna), and is used by the road side device 820 for transmitting and receiving wireless signals. As shown in Fig. 21, the RSU 800 may include a plurality of antennas 810. For example, the plurality of antennas 810 may be compatible with a plurality of frequency bands used by the RSU 800. The road side device 820 includes a controller 821, a memory 822, a network interface 823, and a wireless communication interface 825.

The controller 821 may be, for example, a CPU or a DSP, and operates various functions of a higher layer of the road side device 820. For example, the controller 821 generates a data packet according to data in a signal processed by the wireless communication interface 825 and transfers the generated packet via the network interface 823. The controller 821 may bundle data from a plurality of baseband processors to generate a bundled packet and transfer the generated bundled packet. The controller 821 may have a logic function for performing controls such as radio resource control, radio bearer control, mobility management, access control and scheduling. The controls may be performed in conjunction with a nearby RSU or core network node ( e.g. an access and mobility management function (AMF) . The memory 822 includes a RAM and a ROM, and stores programs executed by the controller 821 and various types of control data (such as a terminal list, transmission power data, and scheduling data).

The network interface 823 is a communication interface for connecting the road side device 820 to a core network 824. The controller 821 may communicate with a core network node or another RSU via the network interface 823. In this case, the RSU 800 and the core network node or other RSU may be connected to each other through a logical interface (such as a C-V2X uu interface and C-V2X PC5). The network interface 823 may also be a wired communication interface or a wireless communication interface for a wireless backhaul. If the network interface 823 is a wireless communication interface, the network interface 823 may use a higher frequency band for wireless communication, compared to a frequency band used by the wireless communication interface 825.

The wireless communication interface 825 supports any cellular communication scheme and provides wireless connection to a terminal located in a cell of the RSU 800 via the antenna 810. The wireless communication interface 825 may typically include, for example, a baseband (BB) processor 826 and RF circuit 827. The BB processor 826 may perform, for example, encoding/decoding, modulation/demodulation, and multiplexing/demultiplexing, and perform various types of signal processing of layers (e.g., L1, medium access control (MAC), radio link control (RLC), and packet data convergence protocol (PDCP)). In place of the controller 821, the BB processor 826 may have part or all of the above logic functions. The BB processor 826 may be a memory storing a communication control program, or a module including a processor configured to execute a program and a related circuit. Updating the program may change the function of the BB processor 826. The module may be a card or blade inserted into a slot of the road side device 820. Alternatively, the module may be a chip mounted on a card or blade. Meanwhile, the RF circuit 827 may include, for example, a mixer, a filter, and an amplifier, and transmits and receives wireless signals via the antenna 810.

As shown in Fig. 21, the wireless communication interface 825 may include a plurality of BB processors 826. For example, the plurality of BB processors 826 may be compatible with a plurality of frequency bands used by the RSU 800. As shown in Fig. 21, the wireless communication interface 825 may include a plurality of RF circuits 827. For example, the plurality of RF circuits 827 may be compatible with the plurality of antenna elements. Although Fig. 21 illustrates an example in which the wireless communication interface 825 includes the plurality of BB processors 826 and the plurality of RF circuits 827, the wireless communication interface 825 may also include a single BB processor 826 or a single RF circuit 827.

### (Second application example)

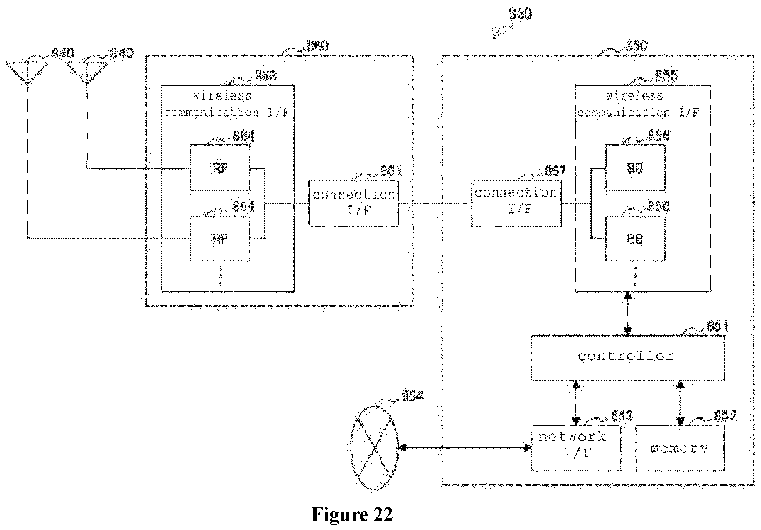

Fig. 22 is a block diagram illustrating a second example of a schematic configuration of an RSU to which the technique of this disclosure can be applied. The RSU includes one or more antennas 840, a road side device 850, and an RRH 860. The RRH 860 and each antenna 840 may be connected to each other via an RF cable. The road side device 850 and the RRH 860 may be connected to each other via a high-speed line such as a fiber optic cable.

Each of the antennas 840 includes a single or plurality of antenna elements (such as a plurality of antenna elements included in an MIMO antenna) and is used by the RRH 860 for transmitting and receiving wireless signals. As shown in Fig. 22, the RSU 830 may include a plurality of antennas 840. For example, the plurality of antennas 840 may be compatible with a plurality of frequency bands used by the RSU 830. The road side device 850 includes a controller 851, a memory 852, a network interface 853, a wireless communication interface 855, and a connection interface 857. The controller 851, the memory 852 and the network interface 853 are the same as the controller 821, the memory 822 and the network interface 823 described with reference to Fig. 21.

The wireless communication interface 855 supports any cellular communication scheme and provides, via the RRH 860 and the antenna 840, wireless communication to a terminal located in a sector corresponding to the RRH 860. The wireless communication interface 855 may typically include, for example, a BB processor 856. The BB processor 856 is the same as the BB processor 826 described with reference to Fig. 21, except that the BB processor 856 is connected to the RF circuit 864 of the RRH 860 via the connection interface 857. As shown in Fig. 22, the wireless communication interface 855 may include a plurality of BB processors 856. For example, the plurality of BB processors 856 may be compatible with a plurality of frequency bands used by the RSU 830. Although Fig. 22 illustrates an example in which the wireless communication interface 855 includes the plurality of BB processors 856, the wireless communication interface 855 may also include a single BB processor 856.

The connection interface 857 is an interface for connecting the road side device 850 (wireless communication interface 855) to the RRH 860. The connection interface 857 may also be a communication module for communication in the above high-speed line connecting the road side device 850 (wireless communication interface 855) to the RRH 860.

The RRH 860 includes a connection interface 861 and a wireless communication interface 863.

The connection interface 861 is an interface for connecting the RRH 860 (wireless communication interface 863) to the road side device 850. The connection interface 861 may also be a communication module for communication in the above high-speed line.

The wireless communication interface 863 transmits and receives wireless signals via the antenna 840. The wireless communication interface 863 may typically include, for example, the RF circuit 864. The RF circuit 864 may include, for example, a mixer, a filter, and an amplifier, and transmits and receives wireless signals via the antenna 840. As shown in Fig. 22, the wireless communication interface 863 may include a plurality of RF circuits 864. For example, the plurality of RF circuits 864 may support a plurality of antenna elements . Although Fig. 22 illustrates an example in which the wireless communication interface 863 includes the plurality of RF circuits 864, the wireless communication interface 863 may also include a single RF circuit 864.

In the RSU 800 and RSU 830 shown in Figs. 21 and 22, one or more components included in the processing circuit 1310 described with reference to Fig. 13 and the processing circuit 1610 described with reference to Fig. 16 may be implemented in a wireless communication interface 912. Alternatively, at least a part of these components may also be implemented by the controllers 821 and 851.

### [Application examples regarding terminal device]

### (First application example)

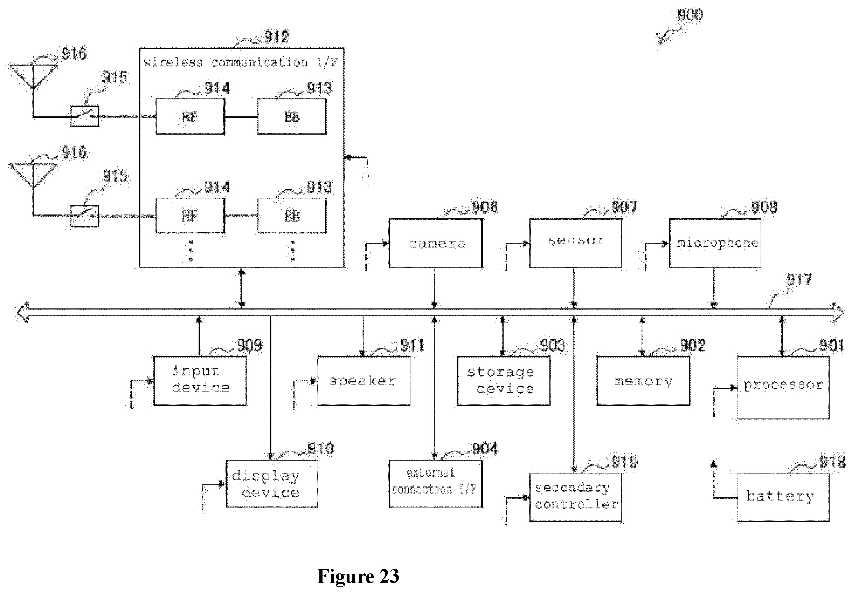

Fig. 23 is a block diagram illustrating an example of a schematic configuration of a smartphone 900 to which the technique of this disclosure can be applied. The smartphone 900 includes a processor 901, a memory 902, a storage device 903, an external connection interface 904, a camera device 906, a sensor 907, a microphone 908, an input device 909, a display device 910, a speaker 911, a wireless communication interface 912, one or more antenna switches 915, one or more antennas 916, a bus 917, a battery 918, and a secondary controller 919.

The processor 901 may be, for example, a CPU or a system on chip (SoC), and controls functions of an application layer and other layers of the smartphone 900. The memory 902 includes a RAM and a ROM, and stores data and program executed by the processor 901. The storage device 903 may include a storage medium such as a semiconductor memory and a hard disk. The external connection interface 904 is an interface for connecting an external device (such as a memory card and a universal serial bus (USB) device) to the smartphone 900.

The camera device 906 includes an image sensor such as a charge coupled device (CCD) and a complementary metal oxide semiconductor (CMOS), and generates a captured image. The sensor 907 may include a set of sensors such as a measurement sensor, a gyro sensor, a geomagnetic sensor, and an acceleration sensor. The microphone 908 converts sound inputted to the smartphone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts an audio signal output from the smartphone 900 into sound.

The wireless communication interface 912 supports any cellular communication scheme (such as LTE and LTE-advanced) and performs wireless communication. The wireless communication interface 912 may typically include, for example, a BB processor 913 and an RF circuit 914. The BB processor 913 can perform, for example, encoding/decoding, modulation/demodulation, and multiplexing/demultiplexing, and perform various types of signal processing for wireless communication. Meanwhile, the RF circuit 914 may include, for example, a mixer, a filter, and an amplifier, and transmits and receives wireless signals via the antenna 916. The wireless communication interface 912 may be one chip module integrated thereon with the BB processor 913 and the RF circuit 914. As shown in Fig. 23, the wireless communication interface 912 may include a plurality of BB processors 913 and a plurality of RF circuits 914. Although Fig. 23 illustrates an example in which the wireless communication interface 912 includes the plurality of BB processors 913 and the plurality of RF circuits 914, the wireless communication interface 912 may also include a single BB processor 913 or a single RF circuit 914.

Furthermore, in addition to the cellular communication scheme, the wireless communication interface 912 may support another type of wireless communication scheme, such as a short-range wireless communication scheme, a near field communication scheme, and a wireless local area network (LAN) scheme. In this case, the wireless communication interface 912 may include a BB processor 913 and an RF circuit 914 for each wireless communication scheme.

Each of the antenna switches 915 switches a connection destination of the antenna 916 among a plurality of circuits (for example, circuits for different wireless communication schemes) included in the wireless communication interface 912.

Each of the antennas 916 includes a single or plurality of antenna elements (such as a plurality of antenna elements included in an MIMO antenna) and is used by the wireless communication interface 912 for transmitting and receiving wireless signals. As shown in Fig. 23, the smartphone 900 may include the plurality of antennas 916. Although Fig. 23 illustrates an example in which the smartphone 900 includes the plurality of antennas 916, the smartphone 900 may also include a single antenna 916.

Furthermore, the smartphone 900 may include an antenna 916 for each wireless communication scheme. In this case, the antenna switch 915 may be omitted from the configuration of the smartphone 900.

The bus 917 connects the processor 901, the memory 902, the storage device 903, the external connection interface 904, the camera device 906, the sensor 907, the microphone 908, the input device 909, the display device 910, the speaker 911, the wireless communication interface 912, and the secondary controller 919 to each other. The battery 918 supplies power to the blocks of the smartphone 900 shown in Fig. 23 via a feeder, which is partially shown as a dashed line in the figure. The secondary controller 919 operates minimum necessary functions of the smartphone 900, for example, in a sleep mode.

In the smartphone 900 shown in Fig. 23, one or more components included in the processing circuit 1310 described with reference to Fig. 13 and the processing circuit 1610 described with reference to Fig. 16 may be implemented in the wireless communication interface 912. Alternatively, at least a part of these components may also be implemented by the processor 901 or the secondary controller 919.

### (Second application example)

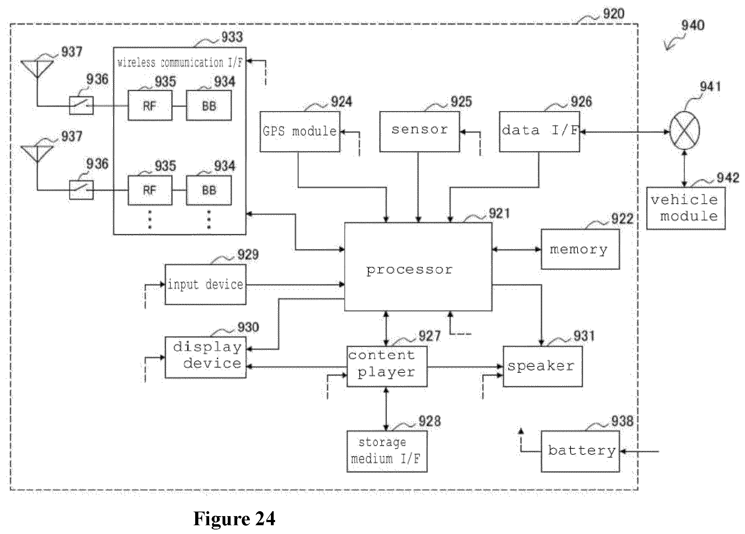

Fig. 24 is a block diagram illustrating an example of a schematic configuration of a car navigation device 920 to which the technique of this disclosure can be applied. The car navigation device 920 includes a processor 921, a memory 922, a global position system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls a navigation function and other functions of the car navigation device 920. The memory 922 includes a RAM and a ROM, and stores data and program executed by the processor 921.

The GPS module 924 measures a position (such as latitude, longitude, and altitude) of the car navigation device 920 using GPS signals received from GPS satellites. The sensor 925 may include a set of sensors such as a gyro sensor, a geomagnetic sensor, and an air pressure sensor. The data interface 926 is connected to, for example, an on board network 941 via a terminal not shown, and obtains data generated by a vehicle (such as vehicle speed data).

The content player 927 reproduces content stored in a storage medium (such as a CD and a DVD) which is inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or an OLED display, and displays an image with a navigation function or the reproduced content. The speaker 931 outputs sound with a navigation function or the reproduced content.

The wireless communication interface 933 supports any cellular communication scheme (such as LTE and LTE-advanced) and performs wireless communication. The wireless communication interface 933 can typically include, for example, a BB processor 934 and an RF circuit 935. The BB processor 934 may perform, for example, encoding/decoding, modulation/demodulation, and multiplexing/demultiplexing, and perform various types of signal processing for wireless communication. Meanwhile, the RF circuit 935 may include, for example, a mixer, a filter, and an amplifier, and transmit and receive wireless signals via the antenna 937. The wireless communication interface 933 can also be one chip module integrated thereon with the BB processor 934 and the RF circuit 935. As shown in Fig. 24, the wireless communication interface 933 can include a plurality of BB processors 934 and a plurality of RF circuits 935. Although Fig. 24 illustrates an example in which the wireless communication interface 933 includes the plurality of BB processors 934 and the plurality of RF circuits 935, the wireless communication interface 933 may also include a single BB processor 934 or a single RF circuit 935.

Furthermore, in addition to the cellular communication scheme, the wireless communication interface 933 may support another type of wireless communication scheme, such as a short-range wireless communication scheme, a near field communication scheme, and a wireless LAN scheme. In this case, the wireless communication interface 933 can include a BB processor 934 and an RF circuit 935 for each wireless communication scheme.

Each of the antenna switches 936 switches a connection destination of the antenna 937 among a plurality of circuits included in the wireless communication interface 933 (such as circuits for different wireless communication schemes).

Each of the antennas 937 includes a single or plurality of antenna elements (such as a plurality of antenna elements included in an MIMO antenna), and is used by the wireless communication interface 933 for transmitting and receiving wireless signals. As shown in Fig. 24, the car navigation device 920 may include a plurality of antennas 937. Although Fig. 24 illustrates an example in which the car navigation device 920 includes the plurality of antennas 937, the car navigation device 920 may also include a single antenna 937.

Furthermore, the car navigation device 920 may include an antenna 937 for each wireless communication scheme. In this case, the antenna switch 936 may be omitted from the configuration of the car navigation device 920.

The battery 938 supplies power to the blocks of the car navigation device 920 shown in Fig. 24 via a feeder, which is partially shown as a dashed line in the figure. The battery 938 accumulates power supplied from a vehicle.

In the car navigation device 920 shown in Fig. 24, one or more components included in the processing circuit 1910 described with reference to Fig. 19 may be implemented in the wireless communication interface 912. Alternatively, at least part of these components may also be implemented by the processor 921.

The technique of this disclosure may also be implemented as an on board system (or vehicle) 940 including one or more blocks in the car navigation device 920, an on board network 941, and a vehicle module 942. The vehicle module 942 generates vehicle data (such as vehicle speed, engine speed, and failure information), and outputs the generated data to the on board network 941.

It should be appreciated that reference to "an embodiment" or similar expressions in this description refers to that, a specific feature, structure, or characteristic described in conjunction with the embodiment is included in at least one specific embodiment of the present disclosure. Thus, in this description, appearances of the phrase "in an embodiment of the present disclosure" and similar expressions do not necessarily refer to the same embodiment.

Those skilled in the art should appreciate that the present disclosure may be implemented as a system, apparatus, method, or computer-readable storage medium (e.g., non-transient storage medium) as a computer program product. Accordingly, the present disclosure may be implemented in various forms, such as an entire hardware embodiment, an entire software embodiment (including firmware, resident software, micro-program code, etc.), or in a form of software and hardware implementations, which may be hereinafter referred to as a "circuit", "module" or "system". Furthermore, the present disclosure may also be, in any tangible media form, implemented as a computer program product having computer-usable program code stored thereon.

The relevant statement of the present disclosure is described with reference to the flowcharts and/or block diagrams of the system, apparatus, method and computer program product according to the specific embodiments of the present disclosure. It can be understood that each block in each flowchart and/or block diagram, and any combination of blocks in the flowchart and/or block diagram, can be implemented using computer program instructions. These computer program instructions may be executed by a machine formed by a processor of a universal computer or special computer or other programmable data processing apparatuses, and the instructions are processed via the computer or other programmable data processing apparatuses, so as to implement the functions or operations specified in the flowchart and/or block diagram.

In the accompanying drawings, the flowcharts and block diagrams of the architecture, functions, and operations that can be implemented by the system, apparatus, method and computer program product according to various embodiments of the present disclosure are shown. Therefore, each block in the flowchart or block diagram may represent a module, segment, or portion of program code, which includes one or more executable instructions to implement the specified logical function. In addition, it should be noted that, in some other embodiments, the functions described in the block may not be performed in the order shown in the figure. For example, two blocks in succession that are shown in a figure may, in fact, be executed substantially concurrently, or according to functions involved, they may, in some cases, be executed in a reverse order noted in the figure. Furthermore, it also need be noted that each block of the block diagram and/or flowchart, and a combination of blocks in the block diagram and/or flowchart, can be implemented by a dedicated hardware-based system, or specified functions or operations are performed by a combination of dedicated hardware and computer instructions.

The embodiments of the present disclosure have been described above, but the above description is exemplary rather than exhaustive, and not limited to the embodiments disclosed. Many modifications and variations will be apparent to those of ordinary skill in the art without departing from the scope and spirit of the described embodiments. The selection of the terms used herein is intended to best explain principles of the embodiments, practical applications, or technical improvements to the technology in the market, or to enable others of ordinary skill in the art to understand the embodiments disclosed herein.

Note that the technique disclosed in the specification may have the following configurations.
(1) An electronic device for a server device side, comprising:
   a processing circuit configured to:
   obtain vehicle information of a first vehicle for ferry;
   obtain ferry-related information from a ferry-related device;
   generate vehicle ferry assistance information according to the vehicle information of the first vehicle and the ferry-related information; and
   provide the vehicle ferry assistance information to at least one of the first vehicle or the ferry-related device.
(2) The electronic device according to (1), wherein
   the vehicle information comprises at least one of: vehicle reservation information, vehicle position information, vehicle body size information, or vehicle weight information,
   the ferry-related device comprises a shore side device provided on a ferry terminal, and the ferry-related information comprises shore side information related to the ferry terminal, the shore side information comprising at least one of ferry shift information, security check information, weighing and charging information or waiting yard information of the ferry terminal, and
   the processing circuit is configured to: according to the vehicle information and the shore side information, generate at least one of a ferry reservation result, a security check result, weighing and charging information, or waiting yard guidance information of the first vehicle, as the vehicle ferry assistance information.
(3) The electronic device according to (1), wherein
   the vehicle information comprises at least one of: vehicle position information, vehicle orientation information, vehicle body size information, vehicle chassis height information, vehicle weight information, or vehicle speed information,
   the ferry-related device comprises a ferry side device provided on a ferry ridden by the first vehicle, and the ferry-related information comprises ferry information related to the ferry, the ferry information comprising at least one of information of an embarking/disembarking gangplank of the ferry, information of a hydrological environment where the ferry is located, or information of a parking environment on the ferry, and
   the processing circuit is configured to: determine a collision risk of the first vehicle with the ferry according to the vehicle information and the ferry information.
(4) The electronic device according to (3), wherein
   the processing circuit is configured to:
   obtain vehicle information of a second vehicle for ferry; and
   determine a collision risk of the first vehicle with the second vehicle according to the vehicle information of the first vehicle and the second vehicle and the ferry information.
(5) The electronic device according to (3) or (4), wherein
   the processing circuit is configured to: in case where the collision risk exceeds a preset collision risk threshold, generate collision warning information, which is provided as the vehicle ferry assistance information to at least one of the first vehicle or the ferry.
(6) The electronic device according to (5), wherein
   the collision warning information is used for prompting at least one of: a type of the collision risk, a relative position of a collision risk target to the first vehicle, a relative distance of the collision risk target to the first vehicle, a collision risk level, or a type of the collision risk target.
(7) The electronic device according to (1), wherein
   the vehicle information comprises at least one of: vehicle position information, vehicle body size information, vehicle weight information, vehicle type information, vehicle center-of-gravity information,
   the ferry-related device comprises a ferry side device provided on a ferry ridden by the first vehicle, and the ferry-related information comprises ferry information related to the ferry, the ferry information comprising at least one of stowage information of the ferry, information of a parking environment on the ferry, and information of a hydrological environment where the ferry is located, and
   the processing circuit is configured to:
      obtain vehicle information of a plurality of first vehicles;
      according to the vehicle information of the plurality of first vehicles and the ferry information, generate parking guidance information for guiding the plurality of first vehicles to park on a parking deck, as the vehicle ferry assistance information.
(8) The electronic device according to (7), wherein
   the parking guidance information comprises parking safety information dynamically determined according to the vehicle information of the plurality of first vehicles and the ferry information, the parking safety information comprising at least one of a parking space size, parking safety spacing, a vehicle roll amplitude, or whether binding and fastening are required.
(9) The electronic device according to (7), wherein
   the parking guidance information comprises parking space distribution information dynamically planned according to the vehicle information of the plurality of first vehicles and the ferry information,
   the processing circuit is configured to:
      provide the parking space distribution information as the vehicle ferry assistance information to the ferry, for the ferry to display parking space distribution on the parking deck; and/or
      provide, to each first vehicle of the plurality of first vehicles, information of a corresponding parking space for the first vehicle.
(10) The electronic device according to (7), wherein
   the parking guidance information is generated by performing dynamic stowage on the ferry and the plurality of first vehicles.
(11) The electronic device according to (1), wherein
   the processing circuit is configured to:
   obtain the vehicle information of the first vehicle from the first vehicle; and/or
   obtain the vehicle information of the first vehicle that is sensed by the ferry-related device.
(12) The electronic device according to (1), wherein
   the processing circuit is configured to:
   obtain, via an Internet-of-Vehicles communication link, the vehicle information and the ferry-related information.
(13) A shore side device provided on a ferry terminal, comprising:
   a processing circuit configured to:
   obtain vehicle information of a vehicle for ferry;
   obtain shore side information related to the ferry terminal;
   generate vehicle ferry assistance information according to the vehicle information of the vehicle and the shore side information; and
   provide the vehicle ferry assistance information to the vehicle.
(14) The shore side device according to (13), wherein
   the vehicle information comprises at least one of: vehicle reservation information, vehicle position information, vehicle body size information, or vehicle weight information,
   the shore side information comprises at least one of ferry shift information, security check information, weighing and charging information, or waiting yard information of the ferry terminal, and
   the processing circuit is configured to: according to the vehicle information and the shore side information, generate at least one of a ferry reservation result, a security check result, weighing and charging information, or waiting yard guidance information of the vehicle, as the vehicle ferry assistance information.
(15) The shore side device according to (13), wherein
   the shore side device further comprises one or more sensors, and
   the processing circuit is configured to: sense the vehicle information of the vehicle and the shore side information via the one or more sensors.
(16) The shore side device according to (13), wherein
   the processing circuit is configured to: obtain, via an Internet-of-Vehicles communication link, the vehicle information of the vehicle from an Internet-of-Vehicles server device in communication with the vehicle.
(17) The shore side device according to (13), wherein
   the processing circuit is configured to: provide, via an Internet-of-Vehicles communication link, the vehicle ferry assistance information to an on board unit provided on the vehicle.
(18) The shore side device according to (13), wherein
   the processing circuit is configured to: provide, via an Internet-of-Vehicles communication link, the vehicle ferry assistance information to the Internet-of-Vehicles server device, for the Internet-of-Vehicles server device to provide, via the Internet-of-Vehicles communication link, the vehicle ferry assistance information to a mobile smart terminal which is carried on the vehicle and bears an Internet-of-Vehicles communication protocol.
(19) A ferry side device provided on a ferry, comprising:
   a processing circuit configured to:
   obtain vehicle information of a first vehicle riding the ferry;
   obtain ferry information related to the ferry;
   generate vehicle ferry assistance information according to the vehicle information of the first vehicle and the ferry information; and
   provide the vehicle ferry assistance information to the first vehicle.
(20) The ferry side device according to (19), wherein
   the vehicle information comprises at least one of: vehicle position information, vehicle orientation information, vehicle body size information, vehicle chassis height information, vehicle weight information, or vehicle speed information,
   the ferry information comprises at least one of information of an embarking/disembarking gangplank of the ferry, information of a hydrologic environment where the ferry is located, or information of a parking environment on the ferry, and
   the processing circuit is configured to: determine a collision risk of the first vehicle with the ferry according to the vehicle information and the ferry information.
(21) The ferry side device according to (20), wherein
   the processing circuit is configured to:
   obtain vehicle information of a second vehicle riding the ferry; and
   determine a collision risk of the first vehicle with the second vehicle according to the vehicle information of the first vehicle and the second vehicle and the ferry information.
(22) The ferry side device according to (20) or (21), wherein
   the processing circuit is configured to: in case where the collision risk exceeds a preset collision risk threshold, generate collision warning information, which is provided as the vehicle ferry assistance information to the first vehicle.
(23) The ferry side device according to (22), wherein
   the collision warning information is used for prompting at least one of: a type of the collision risk, a relative position of a collision risk target to the first vehicle, a relative distance of the collision risk target to the first vehicle, a collision risk level, a type of the collision risk target.
(24) The ferry side device according to (19), wherein
   the vehicle information comprises at least one of: vehicle position information, vehicle body size information, vehicle weight information, vehicle type information, or vehicle center-of-gravity information,
   the ferry information comprises at least one of stowage information of the ferry, information of a parking environment on the ferry, or information of a hydrological environment where the ferry is located, and
   the processing circuit is configured to:
      obtain vehicle information of a plurality of first vehicles;
      according to the vehicle information of the plurality of first vehicles and the ferry information, generate parking guidance information for guiding the plurality of first vehicles to park on a parking deck, as the vehicle ferry assistance information.
(25) The ferry side device according to (24), wherein
   the parking guidance information comprises parking safety information dynamically determined according to the vehicle information of the plurality of first vehicles and the ferry information, the parking safety information comprising at least one of a parking space size, parking safety spacing, a vehicle roll amplitude, or whether binding and fastening are required.
(26) The ferry side device according to (24), wherein
   the parking guidance information comprises parking space distribution information dynamically planned according to the vehicle information of the plurality of first vehicles and the ferry information, and
   the processing circuit is configured to:
      display parking space distribution on the parking deck of the ferry according to the parking space distribution information; and/or
      provide, to each first vehicle of the plurality of first vehicles, information of a corresponding parking space for the first vehicle.
(27) The ferry side device according to (24), wherein
   the parking guidance information is generated by performing dynamic stowage on the ferry and the plurality of first vehicles.
(28) The ferry side device according to (19), wherein
   the ferry side device further comprises one or more sensors, and
   the processing circuit is configured to: sense the vehicle information of the first vehicle and the ferry information via the one or more sensors.
(29) The ferry side device according to (19), wherein
   the processing circuit is configured to: obtain, via an Internet-of-Vehicles communication link, the vehicle information of the first vehicle from an Internet-of-Vehicles server device in communication with the first vehicle.
(30) The ferry side device according to (19), wherein
   the processing circuit is configured to: provide, via an Internet-of-Vehicles communication link, the vehicle ferry assistance information to an on board unit provided on the first vehicle.
(31) The ferry side device according to (19), wherein
   the processing circuit is configured to: provide, via an Internet-of-Vehicles communication link, the vehicle ferry assistance information to the Internet-of-Vehicles server device, for the Internet-of-Vehicles server device to provide, via the Internet-of-Vehicles communication link, the vehicle ferry assistance information to a mobile smart terminal which is carried on the first vehicle and bears the Internet-of-Vehicles communication protocol.
(32) An electronic device for a vehicle side, the electronic device comprising:
   a processing circuit configured to:
   in response to control information from a server device or a ferry-related device, provide vehicle information of the vehicle to a server device, for the server device or the ferry-related device to generate vehicle ferry assistance information; and
   obtain the vehicle ferry assistance information from the server device or the ferry-related device for assisting the vehicle for ferry.
(33) The electronic device for the vehicle according to (32), wherein
   the electronic device comprises an on board unit based on an Internet-of-Vehicles communication protocol, and
   the processing circuit is configured to: obtain, via an Internet-of-Vehicles communication link, the vehicle ferry assistance information from the ferry-related device.
(34) The electronic device for the vehicle according to (32), wherein
   the electronic device comprises a mobile smart terminal bearing the Internet-of-Vehicles communication protocol, and
   the processing circuit is configured to: obtain, via an Internet-of-Vehicles communication link, the vehicle ferry assistance information from the server device.
(35) The electronic device for the vehicle according to (32), wherein
   the electronic device further comprises one or more sensors, and
   the processing circuit is configured to: in response to the control information, sense the vehicle information via the one or more sensors.
(36) A communication method for a server device, comprising:
   obtaining vehicle information of a vehicle for ferry;
   obtaining ferry-related information from a ferry-related device;
   generating vehicle ferry assistance information according to the vehicle information of the vehicle and the ferry-related information; and
   providing the vehicle ferry assistance information to at least one of the vehicle or the ferry-related device.
(37) A communication method for a shore side device provided on a ferry terminal, comprising:
   obtaining vehicle information of a vehicle for ferry;
   obtaining shore side information related to the ferry terminal;
   generating vehicle ferry assistance information according to the vehicle information of the vehicle and the shore side information; and
   providing the vehicle ferry assistance information to the vehicle.
(38) A communication method for a ferry side device provided on a ferry, comprising:
   obtaining vehicle information of a vehicle riding the ferry;
   obtaining ferry information related to the ferry;
   generating vehicle ferry assistance information according to the vehicle information of the vehicle and the ferry information; and
   providing the vehicle ferry assistance information to the vehicle.
(39) A communication method for a vehicle, comprising:
   in response to control information from a server device or a ferry-related device, providing vehicle information of the vehicle to the server device, for the server device or the ferry-related device to generate vehicle ferry assistance information; and
   obtaining the vehicle ferry assistance information from the server device or the ferry-related device for assisting the vehicle for ferry.
(40) A computer-readable storage medium, comprising executable instructions which, when executed by an information processing apparatus, cause the information processing apparatus to perform the communication method according to any of (36) to (39).
(41) A computer program product, comprising a computer program which, when run by a processor, causes the processor to perform the communication method according to any of (36) to (39).

## Claims

1. An electronic device for a server device side, comprising:
a processing circuit configured to:
obtain vehicle information of a first vehicle for ferry;
obtain ferry-related information from a ferry-related device;
generate vehicle ferry assistance information according to the vehicle information of the first vehicle and the ferry-related information; and
provide the vehicle ferry assistance information to at least one of the first vehicle or the ferry-related device.

2. The electronic device according to claim 1, wherein
the vehicle information comprises at least one of: vehicle reservation information, vehicle position information, vehicle body size information, or vehicle weight information,
the ferry-related device comprises a shore side device provided on a ferry terminal, and the ferry-related information comprises shore side information related to the ferry terminal, the shore side information comprising at least one of ferry shift information, security check information, weighing and charging information, or waiting yard information of the ferry terminal, and
the processing circuit is configured to: according to the vehicle information and the shore side information, generate at least one of a ferry reservation result, a security check result, weighing and charging information, or waiting yard guidance information of the first vehicle, as the vehicle ferry assistance information.

3. The electronic device according to claim 1,wherein
the vehicle information comprises at least one of: vehicle position information, vehicle orientation information, vehicle body size information, vehicle chassis height information, vehicle weight information, or vehicle speed information,
the ferry-related device comprises a ferry side device provided on a ferry ridden by the first vehicle, and the ferry-related information comprises ferry information related to the ferry, the ferry information comprising at least one of information of an embarking/disembarking gangplank of the ferry, information of a hydrological environment where the ferry is located, or information of a parking environment on the ferry, and
the processing circuit is configured to: determine a collision risk of the first vehicle with the ferry according to the vehicle information and the ferry information.

4. The electronic device according to claim 3,wherein the processing circuit is configured to:
obtain vehicle information of a second vehicle for ferry; and
determine a collision risk of the first vehicle with the second vehicle according to the vehicle information of the first vehicle and the second vehicle and the ferry information.

5. The electronic device according to claim 3 or 4, wherein
the processing circuit is configured to: in case where the collision risk exceeds a preset collision risk threshold, generate collision warning information, which is provided as the vehicle ferry assistance information to at least one of the first vehicle or the ferry.

6. The electronic device according to claim 5,wherein
the collision warning information is used for prompting at least one of: a type of the collision risk, a relative position of a collision risk target to the first vehicle, a relative distance of the collision risk target to the first vehicle, a collision risk level, or a type of the collision risk target.

7. The electronic device according to claim 1, wherein
the vehicle information comprises at least one of: vehicle position information, vehicle body size information, vehicle weight information, vehicle type information, vehicle center-of-gravity information,
the ferry-related device comprises a ferry side device provided on a ferry ridden by the first vehicle, and the ferry-related information comprises ferry information related to the ferry, the ferry information comprising at least one of stowage information of the ferry, information of a parking environment on the ferry, or information of a hydrological environment where the ferry is located, and
the processing circuit is configured to:
obtain vehicle information of a plurality of first vehicles;
according to the vehicle information of the plurality of first vehicles and the ferry information, generate parking guidance information for guiding the plurality of first vehicles to park on a parking deck, as the vehicle ferry assistance information.

8. The electronic device according to claim 7,wherein
the parking guidance information comprises parking safety information dynamically determined according to the vehicle information of the plurality of first vehicles and the ferry information, the parking safety information comprising at least one of a parking space size, parking safety spacing, a vehicle roll amplitude, or whether binding and fastening are required.

9. The electronic device according to claim 7,wherein
the parking guidance information comprises parking space distribution information dynamically planned according to the vehicle information of the plurality of first vehicles and the ferry information,
the processing circuit is configured to:
provide the parking space distribution information as the vehicle ferry assistance information to the ferry, for the ferry to display parking space distribution on the parking deck; and/or
provide, to each first vehicle of the plurality of first vehicles, information of a corresponding parking space for the first vehicle.

10. The electronic device according to claim 7, wherein
the parking guidance information is generated by performing dynamic stowage on the ferry and the plurality of first vehicles.

11. The electronic device according to claim 1, wherein
the processing circuit is configured to:
obtain the vehicle information of the first vehicle from the first vehicle; and/or
obtain the vehicle information of the first vehicle that is sensed by the ferry-related device.

12. The electronic device according to claim 1, wherein
the processing circuit is configured to:
obtain, via an Internet-of-Vehicles communication link, the vehicle information and the ferry-related information.

13. A shore side device provided on a ferry terminal, comprising:
a processing circuit configured to:
obtain vehicle information of a vehicle for ferry;
obtain shore side information related to the ferry terminal;
generate vehicle ferry assistance information according to the vehicle information of the vehicle and the shore side information; and
provide the vehicle ferry assistance information to the vehicle.

14. The shore side device according to claim 13, wherein
the vehicle information comprises at least one of: vehicle reservation information, vehicle position information, vehicle body size information, or vehicle weight information,
the shore side information comprises at least one of ferry shift information, security check information, weighing and charging information, or waiting yard information of the ferry terminal, and
the processing circuit is configured to: according to the vehicle information and the shore side information, generate at least one of a ferry reservation result, a security check result, weighing and charging information, or waiting yard guidance information of the vehicle, as the vehicle ferry assistance information.

15. The shore side device according to claim 13, wherein
the shore side device further comprises one or more sensors, and
the processing circuit is configured to: sense the vehicle information of the vehicle and the shore side information via the one or more sensors.

16. The shore side device according to claim 13, wherein
the processing circuit is configured to: obtain, via an Internet-of-Vehicles communication link, the vehicle information of the vehicle from an Internet-of-Vehicles server device in communication with the vehicle.

17. The shore side device according to claim 13, wherein
the processing circuit is configured to: provide, via an Internet-of-Vehicles communication link, the vehicle ferry assistance information to an on board unit provided on the vehicle.

18. The shore side device according to claim 13, wherein
the processing circuit is configured to: provide, via an Internet-of-Vehicles communication link, the vehicle ferry assistance information to an Internet of Vehicles server device, for the Internet of Vehicles server device to provide, via an Internet-of-Vehicles communication link, the vehicle ferry assistance information to a mobile smart terminal which is carried on the vehicle and bears an Internet-of-Vehicles communication protocol.

19. A ferry side device provided on a ferry, comprising:
a processing circuit configured to:
obtain vehicle information of a first vehicle riding the ferry;
obtain ferry information related to the ferry;
generate vehicle ferry assistance information according to the vehicle information of the first vehicle and the ferry information; and
provide the vehicle ferry assistance information to the first vehicle.

20. The ferry side device according to claim 19, wherein
the vehicle information comprises at least one of: vehicle position information, vehicle orientation information, vehicle body size information, vehicle chassis height information, vehicle weight information, or vehicle speed information,
the ferry information comprises at least one of information of an embarking/disembarking gangplank of the ferry, information of a hydrologic environment where the ferry is located, or information of a parking environment on the ferry, and
the processing circuit is configured to: determine a collision risk of the first vehicle with the ferry according to the vehicle information and the ferry information.

21. The ferry side device according to claim 20, wherein
the processing circuit is configured to:
obtain vehicle information of a second vehicle riding the ferry; and
determine a collision risk of the first vehicle with the second vehicle according to the vehicle information of the first vehicle and the second vehicle and the ferry information.

22. The ferry side device according to claims 20 or 21, wherein
the processing circuit is configured to: in case where the collision risk exceeds a preset collision risk threshold, generate collision warning information, which is provided as the vehicle ferry assistance information to the first vehicle.

23. The ferry side device according to claim 22, wherein
the collision warning information is used for prompting at least one of: a type of the collision risk, a relative position of a collision risk target to the first vehicle, a relative distance of the collision risk target to the first vehicle, a collision risk level, a type of the collision risk target.

24. The ferry side device according to claim 19, wherein
the vehicle information comprises at least one of: vehicle position information, vehicle body size information, vehicle weight information, vehicle type information, or vehicle center-of-gravity information,
the ferry information comprises at least one of stowage information of the ferry, information of a parking environment on the ferry, or information of a hydrological environment where the ferry is located, and
the processing circuit is configured to:
obtain vehicle information of a plurality of first vehicles;
according to the vehicle information of the plurality of first vehicles and the ferry information, generate parking guidance information for guiding the plurality of first vehicles to park on a parking deck, as the vehicle ferry assistance information.

25. The ferry side device according to claim 24, wherein
the parking guidance information comprises parking safety information dynamically determined according to the vehicle information of the plurality of first vehicles and the ferry information, the parking safety information comprising at least one of a parking space size, parking safety spacing, a vehicle roll amplitude, or whether binding and fastening are required.

26. The ferry side device according to claim 24, wherein
the parking guidance information comprises parking space distribution information dynamically planned according to the vehicle information of the plurality of first vehicles and the ferry information, and
the processing circuit is configured to:
display parking space distribution on the parking deck of the ferry according to the parking space distribution information; and/or
provide, to each first vehicle of the plurality of first vehicles, information of a corresponding parking space for the first vehicle.

27. The ferry side device according to claim 24, wherein
the parking guidance information is generated by performing dynamic stowage on the ferry and the plurality of first vehicles.

28. The ferry side device according to claim 19, wherein
the ferry side device further comprises one or more sensors, and
the processing circuit is configured to: sense the vehicle information of the first vehicle and the ferry information via the one or more sensors.

29. The ferry side device according to claim 19, wherein
the processing circuit is configured to: obtain, via an Internet-of-Vehicles communication link, the vehicle information of the first vehicle from an Internet-of-vehicles server device in communication with the first vehicle.

30. The ferry side device according to claim 19, wherein
the processing circuit is configured to: provide, via an Internet-of-Vehicles communication link, the vehicle ferry assistance information to an on board unit provided on the first vehicle.

31. The ferry side device according to claim 19, wherein
the processing circuit is configured to: provide, via an Internet-of-Vehicles communication link, the vehicle ferry assistance information to an Internet of Vehicles server device, for the Internet-of-Vehicles server device to provide, via the Internet-of-Vehicles communication link, the vehicle ferry assistance information to a mobile smart terminal which is carried on the first vehicle and bears an Internet-of-Vehicles communication protocol.

32. An electronic device for a vehicle side, comprising:
a processing circuit configured to:
in response to control information from a server device or a ferry-related device, provide vehicle information of the vehicle to the server device, for the server device or the ferry-related device to generate vehicle ferry assistance information; and
obtain the vehicle ferry assistance information from the server device or the ferry-related device for assisting the vehicle for ferry.

33. The electronic device for the vehicle according to claim 32,
the electronic device comprises an on board unit based on an Internet-of-Vehicles communication protocol, and
the processing circuit is configured to: obtain, via an Internet-of-Vehicles communication link, the vehicle ferry assistance information from the ferry-related device

34. The electronic device for the vehicle according to claim 32,
the electronic device comprises a mobile smart terminal bearing an Internet-of-Vehicles communication protocol,
the processing circuit is configured to: obtain, via an Internet-of-Vehicles communication link, the vehicle ferry assistance information from the server device.

35. The electronic device for the vehicle according to claim 32,
the electronic device further comprises one or more sensors, and
the processing circuit is configured to: in response to the control information, sense the vehicle information via the one or more sensors.

36. A communication method for a server device, comprising:
obtaining vehicle information of a vehicle for ferry;
obtaining ferry-related information from a ferry-related device;
generating vehicle ferry assistance information according to the vehicle information of the vehicle and the ferry-related information; and
providing the vehicle ferry assistance information to at least one of the vehicle or the ferry-related device.

37. A communication method for a shore side device provided on a ferry terminal, comprising:
obtaining vehicle information of a vehicle for ferry;
obtaining shore side information related to the ferry terminal;
generating vehicle ferry assistance information according to the vehicle information of the vehicle and the shore side information; and
providing the vehicle ferry assistance information to the vehicle.

38. A communication method for a ferry side device provided on a ferry, comprising:
obtaining vehicle information of a vehicle riding the ferry;
obtaining ferry information related to the ferry;
generating vehicle ferry assistance information according to the vehicle information of the vehicle and the ferry information; and
providing the vehicle ferry assistance information to the vehicle.

39. A communication method for a vehicle, comprising:
in response to control information from a server device or a ferry-related device, providing vehicle information of the vehicle to the server device, for the server device or the ferry-related device to generate vehicle ferry assistance information; and
obtaining the vehicle ferry assistance information from the server device or the ferry-related device for assisting the vehicle for ferry.

40. A computer-readable storage medium, comprising executable instructions which, when executed by an information processing apparatus, cause the information processing apparatus to perform the communication method according to any of claims 36 to 39.

41. A computer program product, comprising a computer program which, when run by a processor, causes the processor to perform the communication method according to any of claims 36 to 39.
